# EUROPEAN PATENT SPECIFICATION

(11) **EP 3 143 789 B1**
(45) Date of publication and mention of the grant of the patent: **02.01.2019**
(21) Application number: 15723417.0
(22) Date of filing: 08.05.2015
(51) Int. Cl.: H04W 16/10, H04W 36/20, H04W 36/00, H04W 36/38, H04W 36/30, H04W 84/04, H04W 72/08

(54) **SMALL CELL CHANNEL SELECTION**
KANALAUSWAHL FÜR KLEINZELLEN
SÉLECTION DE CANAUX POUR PETITES CELLULES

(30) Priority: 13.05.2014 US 201461992795 P; 17.12.2014 US 201414574223
(43) Date of publication of application: 22.03.2017
(73) Proprietor: Qualcomm Incorporated, San Diego, CA 92121-1714 (US)
(72) Inventor: CHAUDHURI, Kausik Ray, San Diego, California 92121-1714 (US); YENAMANDRA, Rao Sanyasi, San Diego, California 92121-1714 (US)
(74) Representative: Dunlop, Hugh Christopher
(86) International application number: PCT/US2015/029931
(87) International publication number: WO 2015/175342

(56) References cited:
- EP-A1- 2 426 974
- WO-A1-2012/118740
- WO-A1-2013/109172
- US-A1- 2013 121 272
- US-A1- 2013 235 759

## Description

### BACKGROUND

Aspects of this disclosure relate generally to telecommunications, and more particularly to selecting and utilizing an operating channel at a small cell.

Wireless communication systems are widely deployed to provide various types of communication content such as, for example, voice, data, and so on. Typical wireless communication systems may be multiple-access systems capable of supporting communication with multiple users by sharing available system resources (e.g., bandwidth, transmit power, etc.). Examples of such multiple-access systems may include code division multiple access (CDMA) systems, time division multiple access (TDMA) systems, frequency division multiple access (FDMA) systems, orthogonal frequency division multiple access (OFDMA) systems, and the like. Additionally, the systems can conform to specifications such as third generation partnership project (3GPP), 3GPP long term evolution (LTE), ultra mobile broadband (UMB), evolution data optimized (EV-DO), etc.

To supplement conventional base station coverage in wireless communication systems, additional small cells can be deployed to provide more robust wireless coverage to mobile devices. For example, small cells (e.g., which may include Home NodeBs or Home eNBs, collectively referred to as H(e)NBs, femto nodes, pico nodes, micro nodes, etc.) can be deployed for incremental capacity growth, richer user experience, in-building or other specific geographic coverage, and/or the like. In some configurations, such small cells may be connected to the Internet via a broadband connection (e.g., digital subscriber line (DSL) routers, cable or other modems, etc.), which can provide the backhaul link to the mobile operator's network. In this regard, small cells are often deployed in homes, offices, etc. without consideration of a current network environment.

Small cells may utilize a channel selection (CS) process where a Network Listen Module (NLM) at the small cell measures interference on one or more defined LTE channel frequencies such to select a desirable channel frequency for operation. For example, the NLM can measure interference of the channels (or frequency band) by measuring the signal strength of surrounding small cells and other interfering sources (e.g., macro cells or other network nodes) on one or more of the available channels, and the small cell can select a channel with the least amount of interference. The CS process may also consider an operation, administration, and management (OAM) configuration which can provide an initial list of the LTE channel frequencies, switching thresholds, measurement intervals for measuring interference, and/or the like.

There are limitations, however, in using NLM measurements since these are based on the received signal strength indicator (RSSI) estimates and interference by the NLM, which is located at the small cell. In this regard, for example, it is possible that the small cell selects an operating channel based on a low RSSI of a neighboring cell received at the NLM, but the RSSI of the neighboring cell at a UE served by the small cell may be much larger, and thus the UE may be interfered by the neighboring cell when communicating with the small cell over the operating channel. In addition, other inaccuracies in channel selection using NLM measurements may include RSSI measurements and variance dependent on fading environments and time and duration of measurements. Furthermore, intermittent interference in certain subbands of the serving frequency may also affect the NLM measurements.

US 2013/121272 A1 describes a method and apparatus for dynamic frequency selection in wireless communications. WO 2012/118740 A1 describes a method and apparatus for coordinating change of operating frequency.

### SUMMARY

The invention relates to a method for selecting an operating channel for a small cell, an apparatus and a non-transitory computer-readable medium storing computer executable code as set forth in the claims.

To the accomplishment of the foregoing and related ends, the one or more aspects comprise the features hereinafter fully described and particularly pointed out in the claims. The following description and the annexed drawings set forth in detail certain illustrative features of the one or more aspects.

### BRIEF DESCRIPTION OF THE DRAWINGS

The accompanying drawings are presented to aid in the description of various aspects of the disclosure and are provided solely for illustration of the aspects and not limitation thereof.
FIG. 1 is a simplified block diagram of an example wireless system in a building environment in accordance with aspects described herein.
FIG. 2 is a functional block diagram of an example small cell in accordance with aspects described herein.
FIG. 3 is a flow diagram illustrating an example method of switching operating channels in accordance with aspects described herein.
FIGs. 4A-4C depict a flow diagram of an example method for switching an operating channel at a small cell in accordance with aspects described herein.
FIG. 5 is a simplified block diagram of several examples of components that may be employed in communication nodes in accordance with aspects described herein.
FIG. 6 is a simplified diagram of a wireless communication system in accordance with aspects described herein.
FIG. 7 is a simplified diagram of a wireless communication system including small cells in accordance with aspects described herein.
FIG. 8 is a simplified diagram illustrating coverage areas for wireless communication in accordance with aspects described herein.
FIG. 9 is a simplified block diagram of several examples of communication components in accordance with aspects described herein.
FIG. 10 is a simplified block diagram of several examples of apparatuses configured to support communication in accordance with aspects described herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components are shown in block diagram form in order to avoid obscuring such concepts.

Described herein are various aspects related to selecting an operating channel for a small cell and switching to the operating channel at the small cell. For example, the small cell can determine whether an interference condition exists at one or more served user equipments (UE) based on measured downlink (DL) or uplink (UL) metrics, and if so the small cell may receive and utilize signal strength measurements of neighboring cells from served user equipment (UE) in determining a different operating channel. In addition, for example, in switching to a new operating channel, the small cell can cause served connected mode UEs to handover to one or more neighboring cells and/or can cause idle mode UEs to reselect to one or more neighboring cells. At least when the connected mode UEs are handed over, the small cell can switch to the new operating frequency such that minimal impact may be caused to a user experience at the connected mode UEs. Moreover, for example, a persistence delay can be configured at the small cell to prevent frequent switching of operating channels at the small cell. In any case, the small cell can continue to evaluate channels for operation to ensure selection of an operating channel that is desirable for the UEs served by the small cell.

As used herein, the term "operating channel" may refer to a portion of frequency or time resources that are defined to comprise a channel over which cells in a wireless technology (e.g., 3GPP LTE) may communicate. The operating channel may include a collection of contiguous frequency resources (e.g., a "band" of frequency) or non-contiguous frequency resources. The operating channel may also be referred to herein as an operating frequency, band, carrier, and/or the like.

As used herein, the term "small cell" may refer to an access point or to a corresponding coverage area of the access point, where the access point in this case has a relatively low transmit power or relatively small coverage as compared to, for example, the transmit power or coverage area of a macro network access point or macro cell. For instance, a macro cell may cover a relatively large geographic area, such as, but not limited to, several kilometers in radius. In contrast, a small cell may cover a relatively small geographic area, such as, but not limited to, a home, a building, or a floor of a building. As such, a small cell may include, but is not limited to, an apparatus such as a base station (BS), an access point, a femto node, a femtocell, a pico node, a micro node, a Node B, evolved Node B (eNB), home Node B (HNB) or home evolved Node B (HeNB). Therefore, the term "small cell," as used herein, refers to a relatively low transmit power and/or a relatively small coverage area cell as compared to a macro cell.

Aspects of the disclosure provided in the following description and related drawings are directed to specific disclosed aspects. Alternate aspects may be devised without departing from the scope of the disclosure. Additionally, well-known aspects of the disclosure may not be described in detail or may be omitted so as not to obscure more relevant details. Further, many aspects are described in terms of sequences of actions to be performed by, for example, elements of a computing device. It will be recognized that various actions described herein can be performed by specific circuits (e.g., application specific integrated circuits (ASICs)), by computer executable code or instructions being executed by one or more processors, or by a combination of both. Additionally, these sequence of actions described herein can be considered to be embodied or stored entirely within any form of computer readable storage medium, e.g., a medium having stored therein a corresponding set of computer executable code or instructions that upon execution would cause an associated processor to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

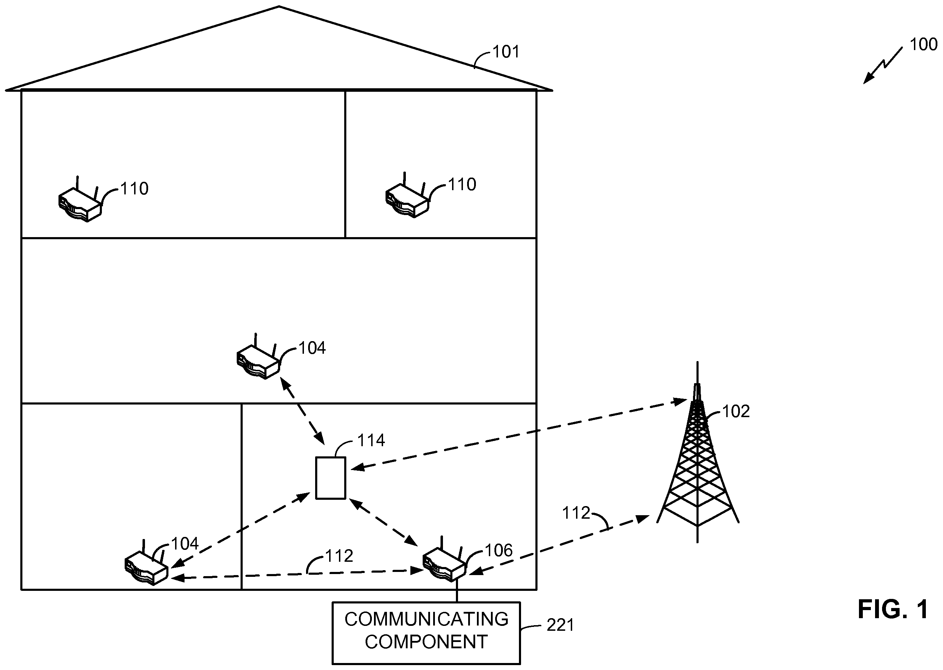

FIG. 1 shows an example wireless communication system 100 deployed in a multi-story/multi-unit apartment or office building 101. The system 100 includes a macro base station 102 outside of the building 101 that can provide one or more UEs 114 with access to a wireless network. The system 100 also includes a plurality of small cells 104, 106, 110, located at various points inside the building 101. The UE 114 located inside one of the building units, is configured to communicate with one or more of the small cells 104, 106, 110, and/or with the macro base station 102 to receive wireless access to a mobile network (not shown).

Each small cell 104, 106, 110 may be configured to communicate via (e.g., transmit or receive signals on) one or more radio frequency channels. Moreover, the small cells 104, 106, 110 may be configured to communicate with one another and/or with other access points (e.g., macro base station 102) over one or more wired or wireless backhaul links. For example, the small cells 104, 106, 110 may communicate over the backhaul interface using an X2 interface. When multiple radio frequency (RF) channels (and/or bands) are available, conventionally configured small cells may be configured to select an operating channel by measuring the signal strengths of surrounding small cells, macro cells, or other nodes on one or more of the channels. For example, small cell 106 may be configured to choose a channel having a lowest signal strength measured by a NLM at the small cell 106, such to avoid interference from nodes producing the measured signal strength. Once the operating channel is selected, the small cell is typically configured to maintain the selected channel until powered down or a configured reselection time. In some examples, a half-day or more may elapse before channel reselection. Furthermore, the foregoing channel selection based on measurements at the small cell location. As shown in FIG. 1, the UE 114 may not be located at the same physical location as a given small cell serving the UE 114 (e.g., small cell 106). Accordingly, the network conditions at the position of the UE 114 may be different than the conditions at the small cell 106.

Accordingly, small cell 106 (and/or any of the other small cells shown in FIG. 1) may be advantageously configured to select an operating channel based on information from UEs being served by the small cell 106. In this regard, as described further herein, small cell 106 may include a communicating component 221 operable for determining to select an operating channel based on received measurement reports, modifying active and/or idle mode communication parameters to cause active and/or idle mode UEs to handover/reselect, switching to a selected operating channel, etc. For example, UE 114 can transmit measurement reports to its serving cell (small cell 106 in this example) as part of evaluating neighboring cells for connected mode handover. For example, the UE 114 may be configured to transmit a measurement report indicating signal strength or quality of the serving cell on the operating channel, strength or quality of signals received from neighboring cells on other operating channels, etc. Based on measurement reports received from the served UEs, small cell 106 may determine an operating channel that mitigates interference to the served UEs. Thus, the selection of the operating channel may consider network conditions experienced by the served UEs 114 in addition or alternatively to network conditions at the NLM of the small cell 106.

Interference experienced by served UEs 114 can be dynamic based on movement of the UEs 114, activation/deactivation of neighboring cells (e.g., small cells 104, 110), other changes in network deployment, etc. Accordingly, DL/UL metrics can be measured and/or received by the small cell 106 to determine whether to evaluate other operating channels for possible switching, and the measurement reports received from the UEs 114 are used to determine an optimal operating channel. Thus, allowing dynamic operating channel selection by small cell 106 can allow the operating channel to change based on different interference conditions at the served UEs 114 (rather than at small cell 106). In addition, when switching operating channels, small cell 106 can cause connected mode UEs 114 to handover to neighboring cells and can cause idle mode UEs 114 to reselect to neighboring cells to minimize impact of the operating channel switch on the UEs 114. In one example, as described further herein, a persistence delay may be configured at the small cell 106 such to avoid frequent operating channel switching, and thus frequent handover/reselection of UEs 114.

Moreover, in an example, because the UE 114 may be able to detect signals from different neighboring cells than the NLM at the small cell 106, small cell 106 may be configured to manage automatic neighbor relations (ANR) based on the received UE 114 measurement reports. For example, small cell 106 can be configured to maintain a neighbor list of neighboring cells for provisioning to one or more other served UEs, where the neighbor list is maintained based at least in part on the measurement reports from the UEs 114. Similarly, small cell 106 may utilize the measurement reports from UEs 114 to determine availability of neighboring cells for handover (e.g., for switching of the operating channel of small cell 106 or otherwise), or other capabilities of the neighboring cells (e.g., X2 interface capabilities).

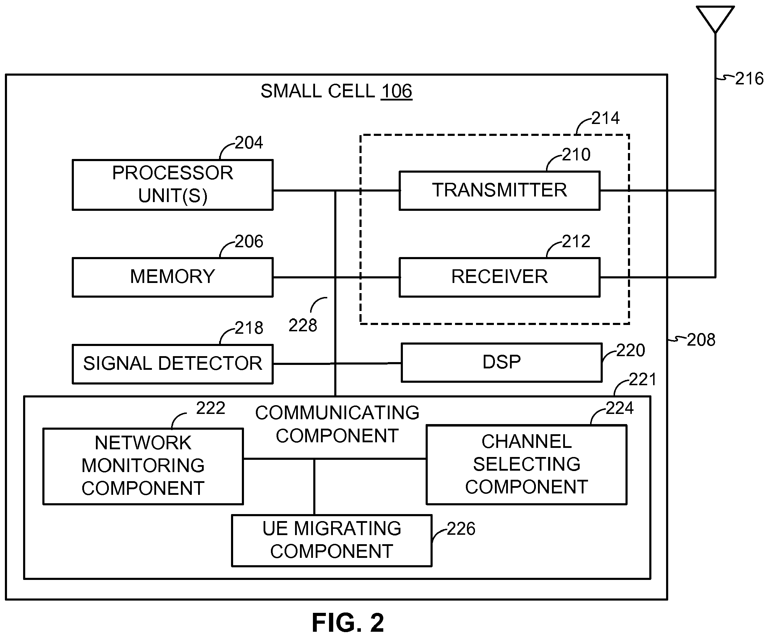

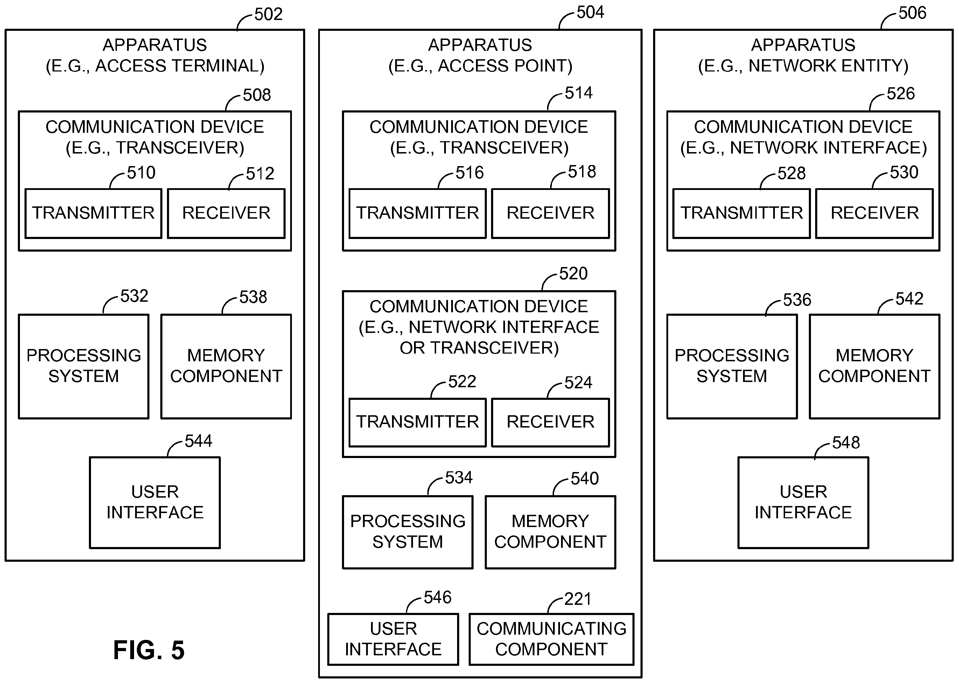

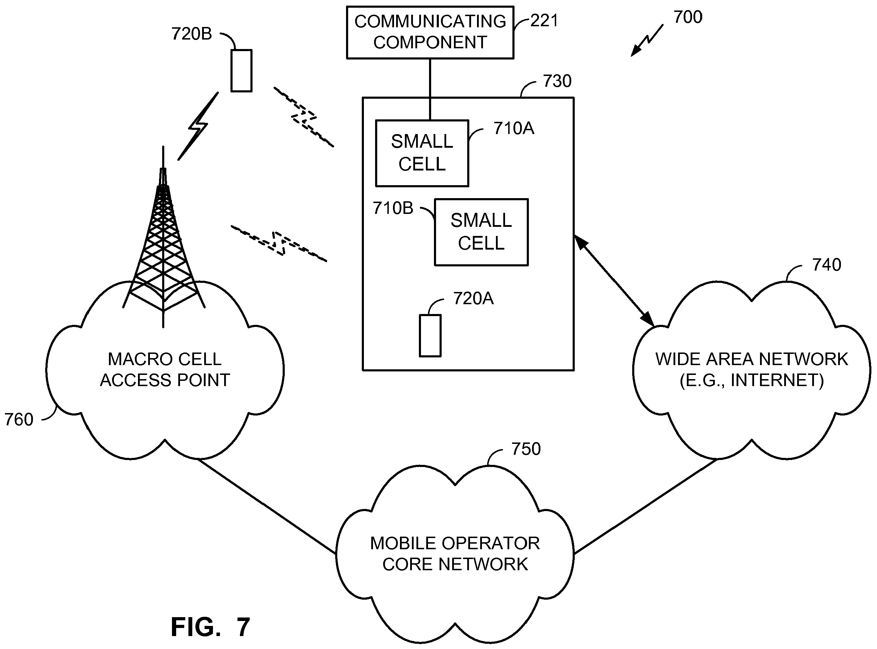

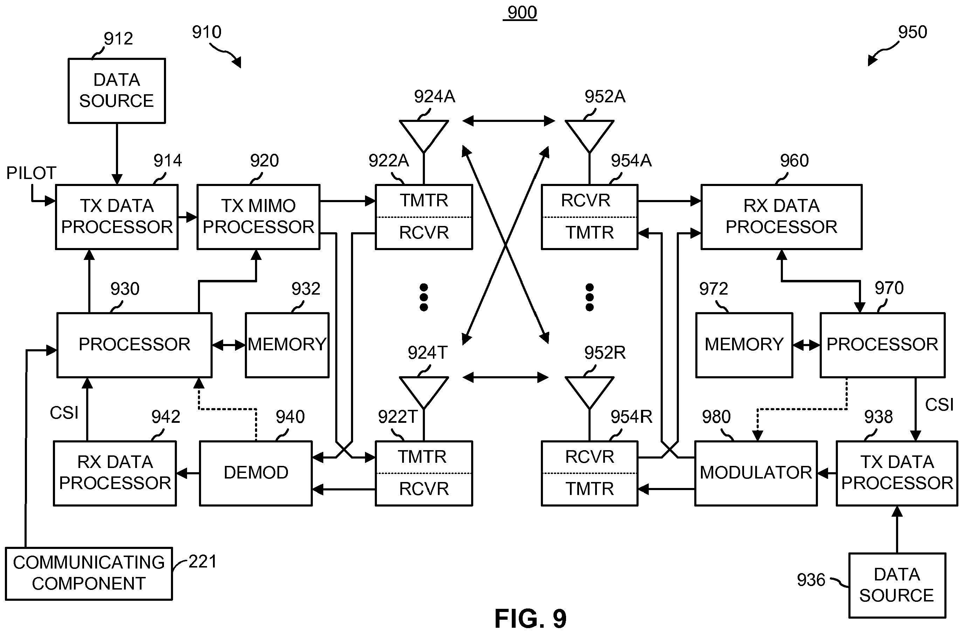

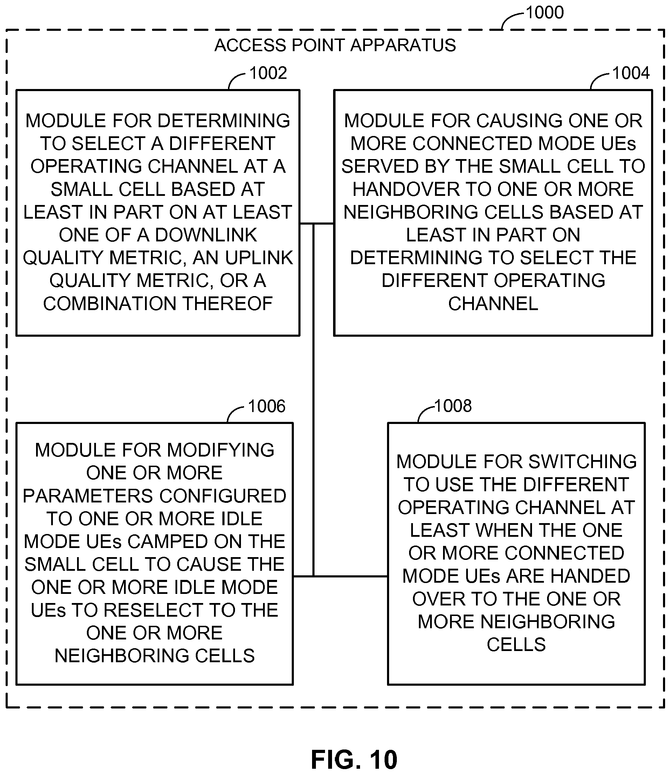

FIG. 2 illustrates a small cell 106 for performing operating channel selection in a wireless network. Small cell 106 may be or may include substantially any of the apparatuses or devices described herein, such as small cells 104, 110 (FIG. 1), apparatus 504 (FIG. 5), small cells 710A, 710B (FIG. 7), wireless device 910 (FIG. 9), apparatus 1000 (FIG. 10), etc. Small cell 106 may include a processor 204 for controlling operation of the small cell 106. Processor 204 may also be referred to as a central processing unit (CPU). Memory 206, which may include both read-only memory (ROM) and random access memory (RAM), may provide instructions and data to the processor 204. A portion of the memory 206 may also include non-volatile random access memory (NVRAM). Processor 204 typically performs logical and arithmetic operations based on program instructions stored within the memory 206. The instructions in the memory 206 may be executable to perform certain functions described herein.

Processor 204 may comprise or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various methods described herein.

Small cell 106 may also include a housing 208 that may include a transmitter 210 and/or a receiver 212 to allow transmission and reception of data between the small cell 106 and a remote network node such as UE 114 (FIG. 1). Transmitter 210 and receiver 212 may be combined into a transceiver 214. An antenna 216 may be attached to the housing 208 and electrically coupled to the transceiver 214 to facilitate transmitting and receiving signals. Small cell 106 may also include (not shown) multiple transmitters, multiple receivers, multiple transceivers, and/or multiple antennas.

Small cell 106 may also include a signal detector 218 that may be used to detect and quantify the level of signals received by the transceiver 214. Signal detector 218 may detect such signals as total energy, energy per subcarrier per symbol, power spectral density and other signals. Small cell 106 may also include a digital signal processor (DSP) 220 for use in processing signals. The DSP 220 may be configured to generate a packet for transmission.

Small cell 106 may also include a communicating component 221 operable for determining to select an operating channel based on received measurement reports, modifying active and/or idle mode communication parameters to cause active and/or idle mode UEs to handover/reselect, switching to a selected operating channel, etc. For example, communicating component 221 can include a network monitoring component 222. Network monitoring component 222 can be configured to receive certain DL quality metrics from served UEs 114 (e.g., via signals from the UEs 114 received by receiver 212) and/or measure certain UL quality metrics from signals received from served UEs 114. Network monitoring component 222 can accordingly determine whether an interference condition exists for the one or more served UEs 114 such to determine whether to switch to a different operating frequency. Network monitoring component 222 can be configured to obtain quality metrics relating to radio conditions over one or more channels for selecting an operating channel for small cell 106. For example, the quality metrics can include strengths/qualities of a channel including received signal strength indicator (RSSI), reference signal received power (RSRP), reference signal received quality (RSRQ), etc., configuration parameters indicative of signals strength/quality including uplink modulation coding scheme (MCS), power headroom report (PHR), uplink block error rate (BLER), channel quality indicator (CQI), downlink MCS, etc. Network monitoring component 222 can also be configured to receive measurement reports from one or more UEs (e.g., as part of a handover procedure), as described further herein, receive signals from an NLM located at or accessible by small cell 106, and/or the like.

Communicating component 221 may also include a channel selecting component 224. Channel selecting component 224 can be configured to select an operating channel for small cell 106. Channel selecting component 224 may select the operating channel based on received or measured DL/UL quality metrics, measurement reports received from served UEs 114, etc. In addition, for example, channel selecting component 224 may aggregate measurement reports received from served UEs 114 to identify statistically significant quality indicators. Based on a comparison of a statistically significant quality indicator with a threshold quality, for example, channel selecting component 224 may determine that a new operating channel should be selected (e.g., where quality of a current operating channel is below a threshold quality and/or where quality of another operating channel achieves a threshold quality). Statistical significance and/or the threshold quality may be configured at small cell 106 (e.g., based on an OAM configuration message, a configuration stored in memory 206, etc.). The channel selecting component 224 may be further configured to identify the new operating channel for switching based on the measurement reports. A list of available channels may be maintained by small cell 106, such as in the memory 206, which may be determined from various measurement reports, received from an OAM, etc. Based on the received measurement reports, the list of available channels may be sorted (e.g., based on downlink quality indicated or otherwise inferred from the measurement reports, or other configured metric that can be received and/or determined at least based on the measurement reports) for determining an optimal operating channel.

Communicating component 221 may also include a UE migrating component 226 to transition served UEs 114 to other serving cells based on channel selecting component 224 determining to select a new operating channel for small cell 106. UE migrating component 226 may be configured to transmit a message to the UEs served by small cell 106. The message may cause one or more of the plurality of served UEs to disconnect from the small cell 106.

For example, UE migrating component 226 may be configured to initiate handover of served UEs 114 in connected mode to neighboring cells. In such examples, the message transmitted to the served UEs 114 may indicate that the UE 114 is to handover to the other neighboring cell. In some examples, UE migrating component 226 may be further configured to negotiate or otherwise initiate handover with the neighboring cell (e.g., using X2 communications). In other examples, UE migrating component 226 may be configured to modify system parameters of small cell 106 to trigger events at the UEs 114 that cause the UEs to handover to neighboring cells. For example, UE migrating component 226 may modify one or more parameters of small cell 106 related to triggering inter-frequency or intra-frequency A3, A4, or A5 events (see Table 1 below), which are configured to the served UEs 114, to result in a more frequent or immediate triggering of an A3, A4, and/or A5 event. In such examples, the modified parameters can be sent to the UEs 114 in one or more broadcast messages (e.g., system information block (SIB messages) or dedicated messages. Accordingly, the served UEs 114 may receive the parameters and trigger event(s) A3, A4, or A5 based on received parameters of the small cell 106, which can cause the UEs 114 to measure neighboring cells for handover, and send corresponding measurement reports to small cell 106 (which may then make a handover decision for the UEs 114).

In addition, for example, UE migrating component 226 may be configured to initiate idle mode reselection of UEs 114 camped on small cell 106. For example, UE migrating component 226 may be configured to transmit a message causing idle mode UEs (also referred to herein as "camped UEs") to perform reselection to neighboring cells. In an example, the message can relate to a broadcast message (e.g., SIB messages) or dedicated message that include modified parameters to be configured at the UEs 114 for determining when to perform idle mode reselection. For example, the modified parameters may relate to a hysteresis parameter that specifies a period of time to wait between determining whether to perform reselection, an offset parameter that specifies a period of time after which to determine whether to perform reselection, channel priority parameters related to a priority of one or more channels for camping, and/or the like. UE migrating component 226 may adjust or modify a value of one or more of these parameters, which causes reconfiguration at idle mode UEs upon receipt of the broadcast or dedicated message, thereby causing more definite and/or immediate (e.g., relatively faster by reducing the period of time) idle mode reselecting performed by the idle mode UEs 114 camped on the small cell 106.

The various components of the small cell 106 may be coupled together by a bus system 228. The bus system 228 may include a data bus, for example, as well as a power bus, a control signal bus, and a status signal bus in addition to the data bus. Those of skill in the art will appreciate the components of the small cell 106 may be coupled together or accept or provide inputs to each other using some other mechanism.

Although a number of separate components are illustrated in FIG. 2, those of skill in the art will recognize that one or more of the components may be combined or commonly implemented. For example, the processor 204 may be used to implement not only the functionality described above with respect to the processor 204, but also to implement the functionality described above with respect to the signal detector 218 and/or the DSP 220, network monitoring component 222, channel selecting component 224, UE migrating component 226, etc. Further, each of the components illustrated in FIG. 2 may be implemented using a plurality of separate elements.

In a specific example, channel selection at the small cell 106 may begin when the small cell 106 powers up. Channel selecting component 224 may be configured to download a channel list from an OAM node (not shown) that indicates available operating channels for the small cell 106. Channel selecting component 224 may then be configured to perform an initial channel selection to select one of the channels from the list as an operating channel. In one example, as described, an NLM (not shown) at the small cell 106 may be utilized to measure signals received over at least a portion of the channels in the list, and channel selecting component 224 can initially select a channel having the lowest RSSI or other measure of signal strength or interference as the operating channel for the small cell 106.

Thereafter, for example, network monitoring component 222 may be configured to periodically evaluate the uplink (UL) and/or downlink (DL) metrics reported by UEs 114 served by small cell 106. For example, a UE 114 operating in connected mode may periodically provide DL channel quality metrics (e.g., in channel state information (CSI) feedback, such as CQI reports). Network monitoring component 222 may evaluate the DL channel quality metrics to determine whether an interference condition exists at one or more UEs 114 on the current operating channel, which may cause channel selecting component 224 to determine whether to switch to a different operating channel (e.g., where the DL channel quality metrics are below a threshold). In any case, network monitoring component 222 may determine whether there are statistical distributions of DL quality metrics reported by the served UEs 114 that are below a threshold, and if so there could be a potential need for a new operating channel selection. In another example (e.g., where no interference condition is determined based on DL metrics), network monitoring component 222 can determine one or more UL channel quality metrics (e.g., UL MCS, PHR, UL BLER, etc.) based on communications received from the served UEs 114, which can be evaluated to determine whether channel selecting component 224 should consider switching operating channels (e.g., where the UL channel quality metrics are below a threshold).

Network monitoring component 222 may determine the various thresholds for identifying interference conditions based at least in part on thresholds configured by an OAM, observed thresholds resulting in selection of an optimal operating channel for a certain period of time, simulation studies, network performance counters, etc. In some examples, network monitoring component 222 may generate the thresholds based on determining a density of the small cell deployment (e.g., based on measurement reports from served UEs 114, communications received from small cells in the deployment over an X2 interface, etc.). For statistical distribution and to be able to identify interference conditions of cell-edge UEs, network monitoring component 222 may determine the thresholds as high percentile values of metrics received over a period of time or for a certain number of received metrics (e.g., 95th, 98th, etc. percentile values).

Where a threshold condition is triggered as per the process mentioned above, network monitoring component 222 may be configured to analyze intra- and inter-frequency neighbor signal strength values reported by the served UEs 114 (e.g., RSSI, RSRP, RSRQ, etc.) to determine whether another operating channel may provide improved interference conditions for one or more of the UEs 114. For example, network monitoring component 222 may receive the measurement reports from the served UEs 114 as part of a handover procedure. The measurement reports may include metrics utilized to assess the strength (RSSI, RSRP, etc.) and/or quality (RSRQ) of the neighboring cells, and may be sorted in order of suitability (e.g., lowest RSSI/RSRP/RSRQ). It is to be appreciated that term signal strength, as used herein, may include such strength and/or quality measurements. In addition, measurement reports from the served UEs 114 may also be used by network monitoring component 222 to refine and manage automatic neighbor relations (ANR) as described above, such to define neighbor lists for the small cell 106 based on the UE measurements instead of or in addition to NLM measurements or OAM configurations. Such neighbor lists may be communicated to served UEs for selecting neighboring cells for handover, for determining parameters of the neighboring cells (e.g., backhaul interface parameters), and/or the like.

Where network monitoring component 222 has not received a measurement report from one or more UEs within a period of time or has not received a sufficient number of measurement reports given a number of served UEs 114, network monitoring component 222 may modify event threshold parameters advertised in a broadcast message (e.g., a SIB message) or a dedicated message, such as an A(i) (e.g., A3, A4, A5) event threshold, which can cause UEs 114 retrieving and updating the parameters to trigger the associated events. Such events when triggered can cause the UEs 114 to generate and send measurement reports to small cell 106 (e.g., for the purposes of evaluating neighboring cells for handover). In any case, channel selecting component 224 can determine whether to select a different operating channel based at least in part on the measurement reports received from one or more served UEs 114. For example, channel selecting component 224 can determine a channel for which a received signal strength reported by the UEs 114 (e.g. in total) is lowest, for which a received signal strength reported by the UEs 114 is lowest on average, for which a received signal strength reported by all served UEs 114 does not exceed a threshold, etc. In one example, network monitoring component 222 may rank the channels based on reported signal strength. In any case, channel selecting component 224 can accordingly select a different channel to be the operating channel for the small cell 106 where the different channel has more desirable radio conditions (e.g., lower reported signal strength) than the current operating channel.

UE migrating component 226 can attempt to cause the served UEs 114, in both idle and connected modes, to migrate to neighboring cells or otherwise not attempt to access small cell 106 while the small cell 106 switches to the selected operating channel. For example, UE migrating component 226 can handover connected mode UEs 114 to one or more neighboring cells and/or can cause idle mode UEs 114 to perform idle mode reselection to one or more neighboring cells. For example, UE migrating component 226 may be configured to determine whether the small cell 106 has a connection (e.g., an X2 connection) with any neighboring cells (not shown) such to negotiate handover of one or more connected mode UEs 114. If so, UE migrating component 226 may be configured to negotiate with intra/inter-frequency neighbor cells over the X2 interface and force network-initiated intra/inter-frequency handover of one or more connected mode UEs 114. Intra-frequency handover may be preferred where intra-frequency neighboring cells are present.

In another example, UE migrating component 226 can cause handover of connected mode UEs 114 based at least in part on modifying system parameters sent to UEs in a broadcast message (e.g., a SIB message) or a dedicated message, such as parameters related to triggering A3, A4, A5 events at the UE for sending measurement reports and facilitating intra/inter-frequency handover of the UEs. In this example, intra-frequency handover may be preferred where intra-frequency neighboring cells are present.

In addition, UE migrating component 226 may be configured to modify hysteresis, offset parameters, and/or channel priority parameters broadcasted to idle mode UEs 114 to cause the idle mode UEs 114 to reselect to other neighboring cells. For example, UE migrating component 226 can decrease the hysteresis and/or offset parameters so that the idle mode UEs 114 can attempt reselection sooner than with the previously configured parameters. Furthermore, for example, UE migrating component 226 can decrease the channel priority parameters to make the small cell 106 operating channel less desirable, such to cause idle mode UEs 114 to reselect a neighboring cell that uses a different operating channel in the next reselection opportunity. This can increase the likelihood that the idle mode UEs 114 reselect a neighboring cell where a neighboring cell with a higher priority operating channel is present. In one example, UE migrating component 226 may increase the channel priority of the operating channel to which the small cell 106 plans to switch.

Channel selecting component 224 may be configured to switch to the selected channel based on UE migrating component 226 causing migration of the connected and/or idle mode UEs 114. In one example, channel selecting component 224 may begin switching to the selected channel once the connected mode UEs 114 are handed over and regardless of the idle mode UEs 114. Switching to the selected channel, in this regard, may include switching the transmitter 210 and/or receiver 212 to operate on the selected channel.

In some examples, to avoid excessive signaling burden on the network, channel selecting component 224 may be configured with a persistence delay (e.g., from an OAM, a configuration stored in memory, etc.). Accordingly, in one example, the persistence delay may relate to a timer value, and upon switching to the selected channel, channel selecting component 224 may initialize a timer using the persistence delay timer value such that a subsequent channel selection may not occur until after expiration of the timer. In some examples, network monitoring component 222 can also be configured to refrain from monitoring the DL/UL metrics for the purposes of determining whether a new channel should be selected until after expiration of the timer to conserve resources.

In another example, the configured persistence delay may relate to a number of interference conditions and/or a severity of interference conditions that are to be detected by the network monitoring component 222 until selection to a different operating channel can be performed. The persistence delay may be set based at least in part on interference experienced by the UEs 114 (e.g., in previous operating channel selections), small cell deployment characteristics (e.g., a number of small cells within a proximity of small cell 106), etc., and may be configured by the channel selecting component 224 based on observing such interference or characteristics, by an OAM, and/or the like.

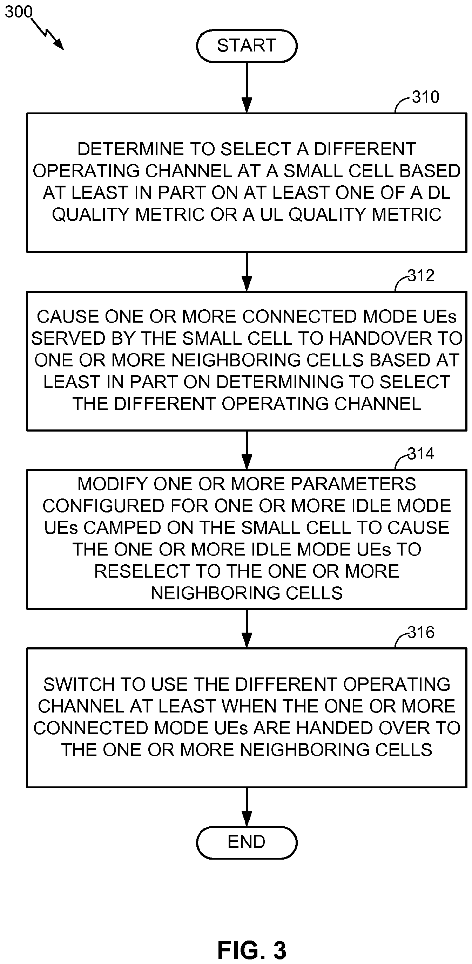

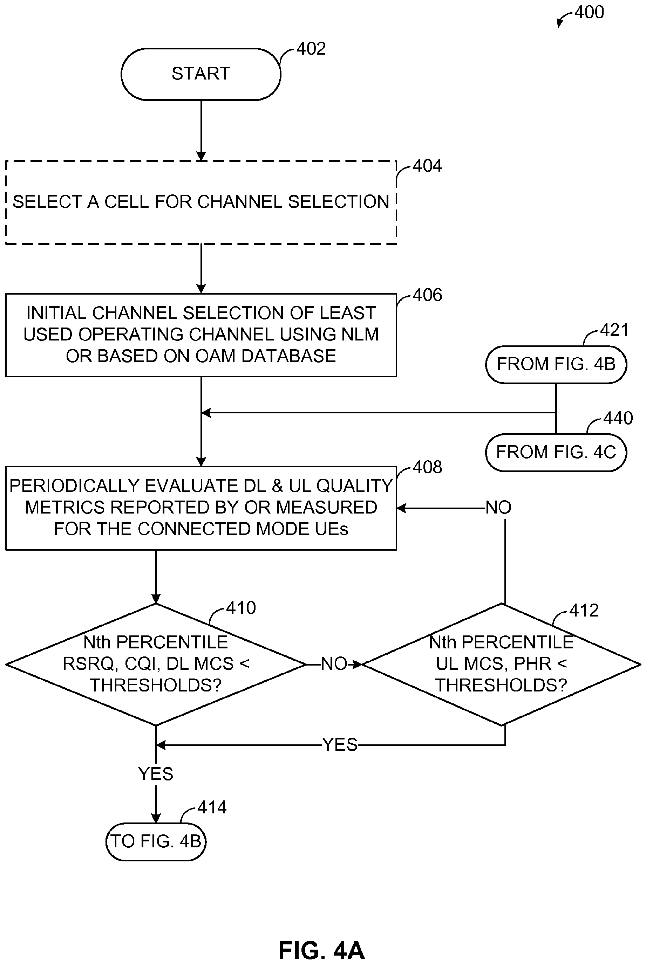

Referring to FIGs. 3 and 4A-4C, methods that may be performed by the apparatuses described herein (e.g., small cell 106, apparatus 504, small cells 710A, 710B, wireless device 910, apparatus 1000, etc.) are depicted. Although the operations described below in FIGs. 3 and 4A-4C are presented in a particular order and/or as being performed by an example component, it should be understood that the ordering of the actions and the components performing the actions may be varied, depending on the implementation. Moreover, it should be understood that the following actions or functions may be performed by a specially-programmed processor, a processor executing specially-programmed software or computer-readable media, or by any other combination of a hardware component and/or a software component capable of performing the described actions or functions. Moreover, in an aspect, a component may be one of the parts that make up a system, may be hardware or software, and/or may be divided into other components.

FIG. 3 illustrates an example method 300 for switching operating channels at a small cell in wireless communications. Method 300 includes, at Block 310, determining to select a different operating channel at a small cell based at least in part on at least one of a DL quality metric or a UL quality metric. Channel selecting component 224 (FIG. 2) can determine to select the different operating channel at the small cell 106 based at least in part on at least one of the DL quality metric or the UL quality metric. As described, network monitoring component 222 can measure the DL and/or UL quality metric as reported by or measured for one or more UEs 114, and can accordingly determine whether an interference condition exists at the one or more UEs 114, and thus, whether to select a different operating channel. For example, the DL quality metric can relate to CQI or other measures of channel quality reported by the UEs 114, and the UL metric may relate to MCS, PHR, BLER, etc. selected or measured for the UEs 114. In addition, as described, determining whether the interference condition exists may relate to comparing the at least one of the DL quality metric or the UL quality metric to one or more thresholds, which may be selected based on a statistics distribution of the quality metrics, to determine whether the interference condition exists. Moreover, in an example, determining to select the different operating channel may be based at least in part on determining whether a persistence delay is satisfied (e.g., whether a persistence timer is expired, a number of interference conditions has occurred, or other events related to a configured persistence delay).

In addition, as described, channel selecting component 224 can determine the different operating channel based at least in part on evaluating measurement reports received form one or more UEs 114 to determine an operating channel that has a lowest reported signal strength, or that would otherwise cause the lowest interference to the one or more UEs 114. For example, channel selecting component 224 may select the operating channel with the lowest average reported signal strength (e.g., RSSI, RSRP, RSRQ, etc.), the operating channel for which none of the UEs 114 report a signal strength over a certain threshold, an operating channel for which no more than a threshold number of UEs 114 report signal strength over the certain threshold, etc. In some examples, channel selecting component 224 may determine that the current operating channel is the most desirable based on the measurement reports received from the UEs, in which case channel selecting component 224 may determine not to select a different operating channel at Block 310.

Method 300 also includes, at Block 312, causing one or more connected mode UEs served by the small cell to handover to one or more neighboring cells based at least in part on determining to select the different operating channel. UE migrating component 226 can cause the one or more connected mode UEs served by the small cell 106 to handover to one or more neighboring cells based at least in part on channel selecting component 224 determining to select the different operating channel. As described, for example, UE migrating component 226 can cause the one or more connected mode UEs to handover by negotiating handover with the one or more neighboring cells (e.g., over an X2 interface), by adjusting parameters broadcasted (e.g. in a SIB message) to the UEs for triggering events related to generating measurement reports for facilitating intra-/inter-frequency handover, and/or the like.

Method 300 also includes, at Block 314, modifying one or more parameters configured for one or more idle mode UEs camped on the small cell to cause the one or more idle mode UEs to reselect to the one or more neighboring cells. UE migrating component 226 can modify the one or more parameters configured to the one or more idle mode UEs camped on the small cell to cause the one or more idle mode UEs to reselect to the one or more neighboring cells. For example, UE migrating component 226 can modify a hysteresis, offset, channel priority, or similar parameter in an attempt to effectuate idle mode reselection by the one or more idle mode UEs camped on small cell 106. As described, this can include small cell 106 transmitting the modified parameters in a broadcast message (e.g., a SIB message). Modifying the one or more parameters configured for one or more idle mode UEs may also be based at least in part on determining to select the different operating channel.

Method 300 further includes, at Block 316, switching to use the different operating channel at least when the one or more connected mode UEs are handed over to the one or more neighboring cells. Channel selecting component 224 can switch to use the different operating channel at least when the one or more connected mode UEs are handed over to the one or more neighboring cells. This may include channel selecting component 224 determining whether all or at least a threshold number of connected mode UEs are handed over. In addition, for example, channel selecting component 224 may not determine whether any or some of the idle mode UEs have reselected before determining to switch the operating channel. For example, channel selecting component 224 can switch the operating channel for transmitter 210, receiver 212, etc.

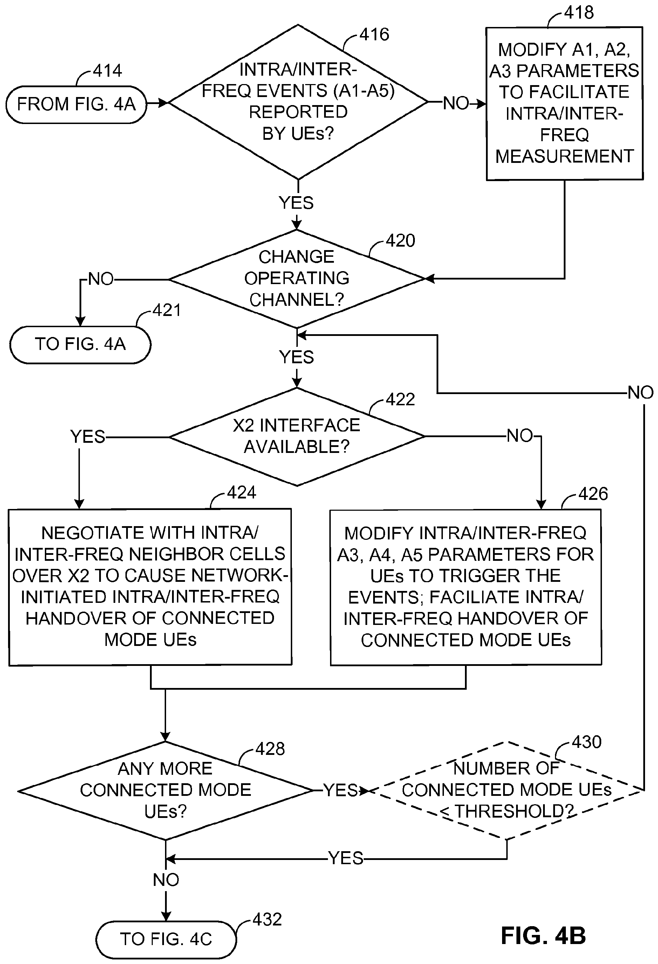

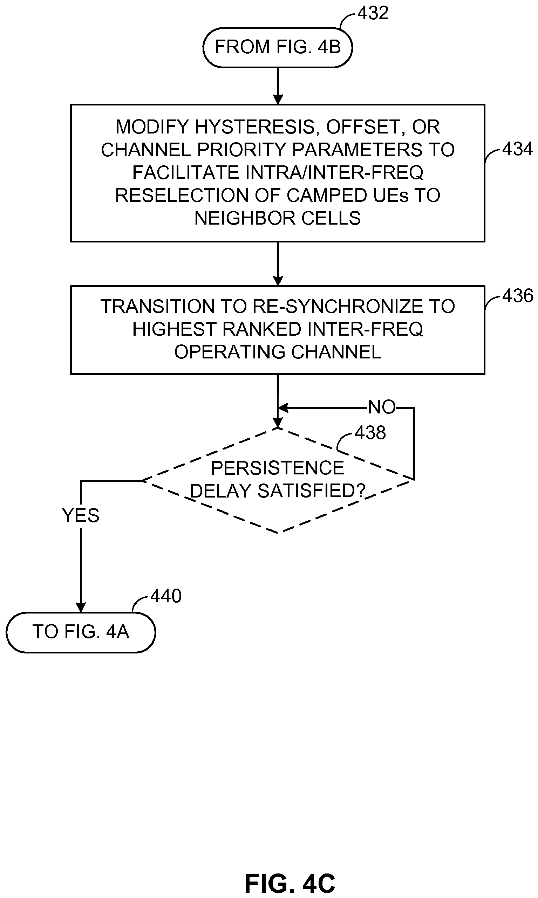

FIGs. 4A, 4B, and 4C collectively depict a flow diagram of an example method of small cell channel selection based on UE reports. The process shown in FIGs. 4A, 4B, and 4C may be implemented in whole or in part by small cell 106 or other devices described herein.

Referring to FIG. 4A, the method begins at Block 402. The start of the method at Block 402 can generally correspond to a powering on or reset of at least one small cell. In some examples, a plurality of small cells may be deployed (see FIG. 1). To avoid a situation where multiple small cells serving UEs attempt to switch at the same time, at Block 404, a cell can optionally be selected for channel selection. In one example, the selection may be based on a token passed among small cells as each small cell completes the channel selection process. In some examples, the selection at Block 404 may be based on a configured time, interval, etc. allocated to a given small cell for channel selection. Thus, the small cells may be configured to coordinate timing for performing channel selection through associated neighbor management messaging, backhaul messaging, or via a centralized network node. For example, channel selecting component 224 can be configured to perform one or more of these functions to determine whether to evaluate other operating channels.

Method 400 includes, at Block 406, making an initial channel selection of a least used operating channel using a NLM or based on an OAM database. Channel selecting component 224 may make the initial channel selection of the least used operating channel, as described, based on using an NLM to measure the channels (e.g., and selecting a channel with the lowest measured signal strength), based on determining a number and/or location/distance of neighboring cells using certain channel frequencies (e.g., and selecting a channel not used by any or at least a threshold number of neighboring cells, or a channel at least not used by neighboring cells within a threshold distance of small cell 106), etc.

Based on selecting the initial channel, the small cell 106 can begin advertising service on the selected channel. UEs 114 may accordingly receive signals advertising the service, and may connect to the small cell 106. As part of connecting to the small cell 106, UEs 114 may perform periodic measurement reporting to facilitate considering neighboring cells for handover when radio conditions with the small cell 106 degrade. For example, the 3GPP specification provides a standardized measurement, format, timing, and triggering requirements for connected UEs to report neighboring cell measurements.

At Block 408, DL and UL quality metrics reported by or measured for the connected mode UEs can be periodically evaluated. Network monitoring component 222 may evaluate the reported or measured DL and UL quality metrics, as described. Network monitoring component 222 may receive the reported DL quality metrics from the UEs 114 (e.g., as RSSI, RSRP, RSRQ, CQI or other quality reports), and specified DL MCS, etc., and/or may determine the UL quality metrics based at least in part on MCS, PHR, BLER, etc. for the UEs 114.

At Block 410, it can be determined whether an Nth percentile of the DL quality metrics (RSRQ, CQI, DL MCS, etc.) are less than one or more thresholds. Network monitoring component 222 may determine whether the Nth percentile of the DL quality metrics (RSRQ, CQI, DL MCS, etc.) are less than one or more threshold, which may indicate an interference condition. For example, network monitoring component 222 may determine this at least in part by aggregating DL quality metric values from CSI reports from one or more of the UEs 114, measurement reports, etc. to determine if the metric is statistically significant. As shown in FIG. 4A, a top Nth percentile value of the metrics (e.g., received over a period of time) may be used as one basis for the determination by network monitoring component 222 at Block 410. In addition, for example, the threshold may be provided via an OAM configuration message, configured in a memory accessible by the small cell, dynamically configured via a configuration interface, received over the air, or through backhaul signaling from other cells, etc.

As shown in FIG. 4A, if the Nth percentile of the DL quality metrics (RSRQ, CQI, DL MCS, etc.) are not less than one or more thresholds, the method includes, at Block 412, similarly determining whether Nth percentile of the UL quality metrics (MCS, PHR, etc.) are less than one or more thresholds. Network monitoring component 222 can determine whether Nth percentile of the UL quality metrics (MCS, PHR, etc.) are less than one or more thresholds. Thus, network monitoring component 222 can include considering both uplink and downlink performance when deciding whether channel selection is appropriate.

If, at Block 412, the Nth percentile of the UL quality metrics (MCS, PHR, etc.) are not less than one or more thresholds, the method returns to Block 408 to continue the periodic evaluation. If, at Block 410, the Nth percentile of the DL quality metrics (RSRQ, CQI, DL MCS, etc.) are less than one or more thresholds, or, at Block 412, the UL quality metrics (MCS, PHR, etc.) are less than one or more thresholds, then an interference condition may exist, and the method proceeds to Block 414 in FIG. 4B for consideration of a new operating channel. For example, channel selecting component 224 can consider whether to select a new operating channel based on network monitoring component 222 determining that the interference condition exists, as described above.

Turning now to FIG. 4B, having identified the potential need for an operating channel switch due to a detected interference condition, at Block 416, it can be determined whether intra/inter-frequency events (A1-A5) are reported by the UEs. Network monitoring component 222 can determine whether the intra/inter-frequency events are reported by the connected mode UEs 114. Such events, as described, can cause generation of measurement reports at the UEs, which can indicate signal strength (and thus interference) detected over various channels by the UEs. Thus, these measurement reports may be desired for determining whether to switch operating channels (e.g., where other operating channels are reported to have low signal strengths at the UEs 114).

If, at Block 416, intra/inter-frequency events (A1-A5) are not reported by the UEs (or not reported by a threshold number or percentage of connected mode UEs), at block 418, A1, A2, or A3 parameters may be modified to facilitate intra/inter-frequency measurements. Network monitoring component 222 may modify these parameters in a broadcast message (e.g., SIB message), dedicated message, etc., to one or more connected mode UEs to cause the UEs to generate measurement reports. In some examples, though not shown, the method may return to Block 416 to determine whether the reports have been received.

The method also includes, at block 420 (after either determining intra/inter-frequency events have been reported on by the UEs at Block 416 or after modifying parameters to facilitate such reporting at Block 418), determining whether to change the operating channel. Channel selecting component 224 can determine whether to change the operating channel, as described, based at least in part on determining whether one or more channels from the measurement reports are more desirable than the current operating channel (e.g., have a lower average reported signal strength, have a lower reported signal strength for at least a threshold number or percentage of served UEs 114, have no or less than a threshold number of reported signal strengths from the UEs 114 that are over a threshold, etc.). In a specific example, channel selecting component 224 may sort the available channels based on such measurements of signal strength. The sort order may be determined by a configuration for the serving node such as OAM configuration. The channels may be sorted based on one or more signal strength measurements. The sorting provides an ordered list of channels available to the small cell 106, ordered by relative signal strength (e.g., interference). If the highest quality channel is the current channel, no change is identified and the method can return to Block 408 of FIG. 4A at Block 421. If the optimal operating channel is not the current operating channel, it can be determined, at Block 420 to change the operating channel.

Upon determining to change the operating channel at Block 420, at Block 422, it can be determined whether an X2 interface is available. UE migrating component 226 can determine whether the X2 interface is available with one or more neighboring cells for negotiating handover of connected mode UEs. For example, X2 is an example of a communication protocol allowing cells in a wireless network nodes to exchange messages (e.g. to facilitate handover or other functions). It is to be appreciated that other protocols facilitating communications between cells can be used in this example. Some small-cell networks include nodes which all have X2 capabilities. Some small cells or neighboring cells, however, may not have an X2 interface.

If, at Block 422, the X2 interface is available, at Block 424, intra/inter-frequency neighbor cells can be negotiated with over X2 to cause network initiated intra/inter-frequency handover of connected mode UEs. UE migrating component 226 can negotiate with the intra/inter-frequency neighbor cells over X2 to cause the network initiated intra/inter-frequency handover of the connected mode UEs. As described, UE migrating component 226 may prefer to perform intra-frequency handover where intra-frequency neighboring cells are reported in the measurement reports from the connected mode UEs 114.

If, at Block 422, X2 is unavailable, at Block 426, intra/inter-frequency A3, A4, A5 parameters can be modified for the UEs to trigger the events, which facilitate intra/inter-frequency handover of connected mode UEs. UE migrating component 226 can modify the intra/inter-frequency A3, A4, A5 parameters for the UEs to trigger the events that facilitate intra/inter-frequency handover of connected mode UEs. For example, intra/inter-frequency A3, A4, or A5 parameters (e.g., cell specific offset to neighbor cell (Ocn)) may be adjusted and communicated by the UE migrating component 226 to the connected UEs. Table 1 below lists example parameters that may be adjusted for intra-frequency and inter-frequency handovers. Upon receipt, a connected UE may trigger a corresponding A3, A4, or A5 event, thus initiating inter or intra frequency handover. As with Block 424, if possible, UE migrating component 226 and/or the UEs may be configured to prefer intra-frequency handover. In one example, A1-A5 events that are detectable at the UE may be summarized as follows, and may have the following tunable parameters (e.g., that may be modified by UE migrating component 226 as described herein) in some wireless communication technologies (e.g., LTE):

**TABLE 1**

| **Event** | **Summary** | **Tunable parameters** |
|---|---|---|
| A1 | Serving cell signal becomes better than a threshold | Serving cell reference signal received power (RSRP), reference signal received quality (RSRQ) |
| A2 | Serving cell signal becomes worse than a threshold | Serving cell RSRP, RSRQ |
| A3 | Neighbor cell signal becomes offset better than the serving cell signal | Ofn, Ofs, Ocn, Ocs, Hys, Off, timeToTrigger |
| A4 | Neighbor cell signal becomes better than threshold | Ofn, Ocn, Hys, Thresh, Off, timeToTrigger |
| A5 | Serving cell signal becomes worse than threshold1 and neighbour cell signal becomes better than threshold2 | Ofn, Ocn, Hys, Thresh1, Thresh2, Off, timeToTrigger |

where Ofn is the frequency specific offset of the frequency of the neighbor cell (e.g., offsetFreq defined within a measObjectEUTRA object corresponding to the frequency of the neighbor cell), Ofs is the frequency specific offset of the frequency of the serving cell (e.g., offsetFreq defined within a measObjectEUTRA object corresponding to the frequency of the serving cell), Ocn is the cell specific offset of the neighbor cell (e.g., cellIndividualOffset defined within a measObjectEUTRA object corresponding to the frequency of the neighbor cell and set to zero if not configured for the neighboring cell), Ocs is the cell specific offset of the serving cell (e.g., cellIndividualOffset defined within a measObjectEUTRA object corresponding to the frequency of the serving cell and set to zero if not configured for the serving cell), Hys is the hysteresis parameter for this event (e.g., hysteresis as defined within a reportConfigEUTRA object for this event), Off is the offset parameter for this event (e.g., a3-Offset as defined within a reportConfigEUTRA object for this event), Thresh1 is the threshold parameter for this event (e.g., a5-Threshold1 as defined within a reportConfigEUTRA object for this event), Thresh2 is the threshold parameter for this event (e.g., a5-Threshold2 as defined within a reportConfigEUTRA for this event), and timeToTrigger is the time during which specific criteria for the event may be met in order to trigger a measurement report.

In either case, it can be determined, at Block 428, whether there are any more connected UEs. UE migrating component 226 may determine whether there are any more connected mode UEs in the small cell 106. If so, at Block 430, it may optionally be determined whether the number of connected mode UEs is less than a threshold. UE migrating component 226 may optionally determine whether the number of connected mode UEs is less than a threshold. If not, the method can proceed to Block 422 to again attempt to cause handover of the connected mode UEs.

If, at Block 428, there are no more connected mode UEs at the small cell, or, at Block 430, the number of connected mode UEs is less than a threshold, the process continues to FIG. 4C via Block 432. For example, because changing the operating channel at small cell 106 can cause the connected UEs to drop any existing communication session, it may not be acceptable to drop more than a threshold number/percentage of UEs (or any UEs) depending on the deployment. For example, in a residential home setting, it may be acceptable to drop less UEs than in an enterprise deployment. The threshold number/percentage of UEs for use in Block 430 may be configured (e.g., by an OAM), determined based on a number of historically served devices, and/or the like.

Turning now to FIG. 4C, where it has been determined to change the operating channel at Block 420, and that no UEs (or a sufficient number of UEs) are connected to the small cell, at Block 434, hysteresis, offset, or channel priority parameters may be modified to facilitate intra/inter-frequency reselection of camped UEs to neighbor cells. UE migrating component 226 may modify the hysteresis, offset, or channel priority parameters, as described, to facilitate the intra/inter-frequency reselection of the camped UEs to neighbor cells. Moreover, as described, small cell 106 can advertise the modified parameters in one or more broadcast messages (e.g., a SIB message), dedicated messages, and/or the like, for consumption and updating/using by UEs to determine when and under what circumstances to perform reselection.

At Block 436, a transition can occur to re-synchronize to a highest ranked inter-frequency operating channel. Channel selecting component 224 can transition to re-synchronize to the highest ranked inter-frequency operating channel (e.g., the operating channel with the lowest reported signal strengths from the UEs, as described above).

At Block 438, it can optionally be determined whether a persistence delay is satisfied. Channel selecting component 224 can determine whether the persistence delay is satisfied before determining whether to evaluate operating channels for switching. For example, determining whether the persistence delay is satisfied can relate to determining whether a persistence timer, which can be set when transitioning to the new operating channel at Block 436, has expired. In another example, determining whether the persistence delay is satisfied may include determining whether a number of interference conditions have occurred since transitioning operating channels at Block 436.

Once the persistence delay is satisfied (or otherwise), the method can proceed back to starting Block 402 in FIG. 4A via Block 440. It is to be appreciated that during the method shown in FIGS. 4A, 4B, and 4C additional measurements reports from devices may be received. These additional reports may be used in subsequent iterations of the channel selection process. In some examples, the process may be configured to consider reports received since a previous operating channel selection, a configured number of reports, or reports from a configured range of time (e.g., last hour, last day, last n minutes, etc.), and/or the like.

FIG. 5 illustrates several sample components (represented by corresponding blocks) that may be incorporated into an apparatus 502, an apparatus 504, and an apparatus 506 (e.g., corresponding to an access terminal, an access point, and a network entity, respectively) to support signal processing operations as taught herein. It should be appreciated that these components may be implemented in different types of apparatuses in different examples (e.g., in an ASIC, in a system on chip (SoC), etc.). The described components also may be incorporated into other apparatuses in a communication system. For example, other apparatuses in a system may include components similar to those described with reference to small cell 106 and associated example methods in FIGs. 2, 3, and 4A-4C to provide similar functionality. Also, a given apparatus may include one or more of the described components. In an example, apparatus 504 can include a small cell 106 that communicates with UEs (e.g., apparatus 502) and network entities (e.g., network entity 508, which may include an OAM and/or other small cells). For instance, the network monitoring component 222, channel selecting component 224, UE migrating component 226, functions thereof, etc., as described above, Blocks 310-316 of method 300 in FIG. 3, Blocks 402-440 of method 400 in FIGs. 4A-4C, etc., as described below, can be implemented by processor modules in processing system 534, in computer executable code or instructions stored in memory component 540 and executed by processing system 534, etc. Further, in this regard, apparatus 504, for example, may include a communicating component 221 operable for determining to select an operating channel based on received measurement reports, modifying active and/or idle mode communication parameters to cause active and/or idle mode UEs to handover/reselect, switching to a selected operating channel, etc., as described above with reference to FIGs. 2, 3, and 4A-4C. It is to be appreciated that communicating component 221 can communicate with or can be implemented by processing system 534, based on instructions in memory component 540, etc.

The apparatus 502 and the apparatus 504 each include at least one wireless communication device (represented by the communication devices 508 and 514) for communicating with other nodes via at least one designated radio access technology. Each communication device 508 includes at least one transmitter (represented by the transmitter 510) for transmitting and encoding signals (e.g., messages, indications, information, and so on) and at least one receiver (represented by the receiver 512) for receiving and decoding signals (e.g., messages, indications, information, pilots, and so on). Similarly, each communication device 514 includes at least one transmitter (represented by the transmitter 516) for transmitting signals (e.g., messages, indications, information, pilots, and so on) and at least one receiver (represented by the receiver 518) for receiving signals (e.g., messages, indications, information, and so on).

A transmitter and a receiver may comprise an integrated device (e.g., embodied as a transmitter circuit and a receiver circuit of a single communication device) in some examples, may comprise a separate transmitter device and a separate receiver device in some examples, or may be embodied in other ways in other examples. In some aspects, a wireless communication device (e.g., one of multiple wireless communication devices) of the apparatus 504 comprises a network listen module, as described.

The apparatus 506 may include at least one communication device (represented by the communication device 526) for communicating with other nodes. For example, the communication device 526 may comprise a network interface that is configured to communicate with one or more network entities via a wire-based or wireless backhaul. In some aspects, the communication device 526 may be implemented as a transceiver configured to support wire-based or wireless signal communication. This communication may involve, for example, sending and receiving: messages, parameters, or other types of information. Accordingly, in the example of FIG. 5, the communication device 526 is shown as comprising a transmitter 528 and a receiver 530. Similarly, communication device 520 may comprise a network interface that is configured to communicate with one or more network entities via a wire-based or wireless backhaul. As with the communication device 526, the communication device 520 is shown as comprising a transmitter 522 and a receiver 524.

The apparatuses 502, 504, and 506 also include other components that may be used in conjunction with signal processing operations as taught herein. The apparatus 502 includes a processing system 532 for providing functionality relating to, for example, communicating with an access point to support functions as taught herein and for providing other processing functionality. The apparatus 504 includes a processing system 534 for providing functionality relating to, for example, functions as taught herein and for providing other processing functionality. The apparatus 506 includes a processing system 536 for providing functionality relating to, for example, functions as taught herein and for providing other processing functionality. The apparatuses 502, 504, and 506 include memory devices 538, 540, and 542 (e.g., each including a memory device), respectively, for maintaining information (e.g., information indicative of reserved resources, thresholds, parameters, and so on). In addition, the apparatuses 502, 504, and 506 include user interface devices 544, 546, and 548, respectively, for providing indications (e.g., audible and/or visual indications) to a user and/or for receiving user input (e.g., upon user actuation of a sensing device such a keypad, a touch screen, a microphone, and so on).

For convenience, the apparatus 502 is shown in FIG. 5 as including components that may be used in the various examples described herein. In practice, the illustrated blocks may have different functionality in different aspects.

The components of FIG. 5 may be implemented in various ways. In some examples, the components of FIG. 5 may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 508, 532, 538, and 544 may be implemented by processor and memory component(s) of the apparatus 502 (e.g., by execution of appropriate code and/or by appropriate configuration of processor components). Similarly, some or all of the functionality represented by blocks 514, 520, 534, 540, and 546 may be implemented by processor and memory component(s) of the apparatus 504 (e.g., by execution of appropriate code and/or by appropriate configuration of processor components). Also, some or all of the functionality represented by blocks 526, 536, 542, and 548 may be implemented by processor and memory component(s) of the apparatus 506 (e.g., by execution of appropriate code and/or by appropriate configuration of processor components).

Some of the access points referred to herein may comprise small cells, as described, to provide voice and high speed data service for access terminals supporting cellular radio communication (e.g., CDMA, WCDMA, UMTS, LTE, etc.).

Small cells may be configured to support different types of access modes. For example, in an open access mode, a small cell may allow any access terminal to obtain any type of service via the small cell. In a restricted (or closed) access mode, a small cell may only allow authorized access terminals to obtain service via the small cell. For example, a small cell may only allow access terminals (e.g., so called home access terminals) belonging to a certain subscriber group (e.g., a closed subscriber group (CSG)) to obtain service via the small cell. In a hybrid access mode, alien access terminals (e.g., non-home access terminals, non-CSG access terminals) may be given limited access to the small cell. For example, a macro access terminal that does not belong to a small cell's CSG may be allowed to access the small cell only if sufficient resources are available for all home access terminals currently being served by the small cell.

Thus, small cells operating in one or more of these access modes may be used to provide indoor coverage and/or extended outdoor coverage. By allowing access to users through adoption of a desired access mode of operation, small cells may provide improved service within the coverage area and potentially extend the service coverage area for users of a macro network.

Thus, in some aspects the teachings herein may be employed in a network that includes macro scale coverage (e.g., a large area cellular network such as a third generation (3G) network, typically referred to as a macro cell network or a WAN) and smaller scale coverage (e.g., a residence-based or building-based network environment, typically referred to as a LAN). As an access terminal (AT) moves through such a network, the access terminal may be served in certain locations by access points that provide macro coverage while the access terminal may be served at other locations by access points that provide smaller scale coverage. In some aspects, the smaller coverage nodes may be used to provide incremental capacity growth, in-building coverage, and different services (e.g., for a more robust user experience).

In the description herein, a node (e.g., an access point) that provides coverage over a relatively large area may be referred to as a macro access point while a node that provides coverage over a relatively small area (e.g., a residence) may be referred to as a small cell. It should be appreciated that the teachings herein may be applicable to nodes associated with other types of coverage areas. For example, a small cell may provide coverage (e.g., coverage within a commercial building) over an area that is smaller than a macro area. In various applications, other terminology may be used to reference a macro access point, a small cell, or other access point-type nodes. For example, a macro access point may be configured or referred to as an access node, base station, access point, eNodeB, macro cell, and so on. In some examples, a node may be associated with (e.g., referred to as or divided into) one or more cells or sectors.

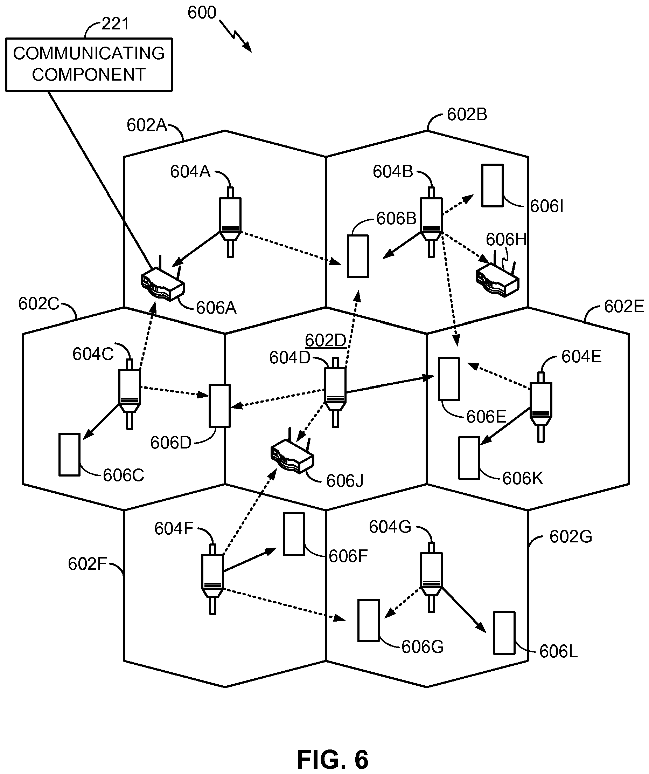

FIG. 6 illustrates a wireless communication system 600, configured to support a number of users, in which the teachings herein may be implemented. The system 600 provides communication for multiple cells 602, such as, for example, macro cells 602A - 602G, with each cell being serviced by a corresponding access point 604 (e.g., access points 604A - 604G). As shown in FIG. 6, access terminals 606 (e.g., access terminals 606A - 606L) may be dispersed at various locations throughout the system over time. Each access terminal 606 may communicate with one or more access points 604 on a forward link (FL) and/or a reverse link (RL) at a given moment, depending upon whether the access terminal 606 is active and whether it is in soft handoff, for example. The wireless communication system 600 may provide service over a large geographic region. For example, macro cells 602A - 602G may cover a few blocks in a neighborhood or several miles in a rural environment. In an example, access points 604 or some of the access terminals (e.g., access terminal 606A, 606H, 606J) may can include a small cell 106, and/or one or more components thereof (as described in FIG. 2) or functionalities associated therewith (e.g., as described in FIGs. 3 and 4A-4C). Moreover, in this regard, access terminals 606A, 606H, and/or 606J may include a communicating component 221 operable for determining to select an operating channel based on received measurement reports, modifying active and/or idle mode communication parameters to cause active and/or idle mode UEs to handover/reselect, switching to a selected operating channel, etc., as described above in reference to FIG. 2.

FIG. 7 illustrates an example of a communication system 700 where one or more small cells operating according to one or more aspects described herein are deployed within a network environment. Specifically, the system 700 includes multiple small cells (e.g., small cells 710A and 710B) installed in a relatively small scale network environment (e.g., in one or more user residences 730). The small cells 710A and/or 710B may include small cell 106, and thus may include one or more of the components thereof (described in FIG. 2) for performing functions associated therewith (e.g., as described in FIGs. 3 and 4A-4C). Moreover, in this regard, small cells 710A and/or 710B may include a communicating component 221 operable for determining to select an operating channel based on received measurement reports, modifying active and/or idle mode communication parameters to cause active and/or idle mode UEs to handover/reselect, switching to a selected operating channel, etc., as described above in reference to FIGs. 2, 3, and 4A-4C.

Each small cell (e.g., small cells 710A and 710B) may be coupled to a wide area network 740 (e.g., the Internet) and a mobile operator core network 750 via a DSL router, a cable modem, a wireless link, or other connectivity means (not shown). As will be discussed below, each small cell (e.g., small cells 710A and 710B) may be configured to serve associated access terminals (e.g., access terminal 720A) and, optionally, other (e.g., hybrid or alien) access terminals (e.g., access terminal 720B). In other words, access to small cells (e.g., small cells 710A and 710B) may be restricted whereby a given access terminal may be served by a set of designated (e.g., home) small cell(s) but may not be served by any non-designated small cells (e.g., a neighbor's small cell).

In an example, the owner of a small cell 710 may subscribe to mobile service, such as, for example, 3G mobile service, offered through the mobile operator core network 750. In addition, an access terminal 720 may be capable of operating both in macro environments and in smaller scale (e.g., residential) network environments. In other words, depending on the current location of the access terminal 720, the access terminal 720 may be served by a macro cell access point 760 associated with the mobile operator core network 750 or by any one of a set of small cells 710 (e.g., the small cells 710A and 710B that reside within a corresponding user residence 730). For example, when a subscriber is outside his home, he is served by a standard macro access point (e.g., access point 760) and when the subscriber is at home, he is served by a small cell (e.g., small cell 710A). Here, a small cell 710 may be backward compatible with legacy access terminals 720.

A small cell 710 may be deployed on a single frequency or, in the alternative, on multiple frequencies. Depending on the particular configuration, the single frequency or one or more of the multiple frequencies may overlap with one or more frequencies used by a macro access point (e.g., access point 760).

In some aspects, an access terminal 720 may be configured to connect to a preferred small cell (e.g., the home small cell of the access terminal 720) whenever such connectivity is possible. For example, whenever the access terminal 720A is within the user's residence 730, it may be desired that the access terminal 720A communicate only with the home small cell 710A or 710B.

In some aspects, if the access terminal 720 operates within the macro cellular network 750 but is not residing on its most preferred network (e.g., as defined in a preferred roaming list), the access terminal 720 may continue to search for the most preferred network (e.g., the preferred small cell 710) using a better system reselection (BSR) procedure, which may involve a periodic scanning of available systems to determine whether better systems are currently available and subsequently acquire such preferred systems. The access terminal 720 may limit the search for specific band and channel. For example, one or more operating channels for the small cells may be defined whereby all small cells (or all restricted small cells) in a region operate on the operating channel(s). The search for the most preferred system may be repeated periodically. Upon discovery of a preferred small cell 710, the access terminal 720 selects the small cell 710 and registers on it for use when within its coverage area.

Access to a small cell may be restricted in some aspects. For example, a given small cell may only provide certain services to certain access terminals. In deployments with so-called restricted (or closed) access, a given access terminal may only be served by the macro cell mobile network and a defined set of small cells (e.g., the small cells 710 that reside within the corresponding user residence 730). In some examples, an access point may be restricted to not provide, for at least one node (e.g., access terminal), at least one of: signaling, data access, registration, paging, or service.

In some aspects, a restricted small cell (which may also be referred to as a Closed Subscriber Group Home NodeB) is one that provides service to a restricted provisioned set of access terminals. This set may be temporarily or permanently extended as necessary. In some aspects, a Closed Subscriber Group (CSG) may be defined as the set of access points (e.g., small cells) that share a common access control list of access terminals.

Various relationships may thus exist between a given small cell and a given access terminal. For example, from the perspective of an access terminal, an open small cell may refer to a small cell with unrestricted access (e.g., the small cell allows access to any access terminal). A restricted small cell may refer to a small cell that is restricted in some manner (e.g., restricted for access and/or registration). A home small cell may refer to a small cell on which the access terminal is authorized to access and operate on (e.g., permanent access is provided for a defined set of one or more access terminals). A hybrid (or guest) small cell may refer to a small cell on which different access terminals are provided different levels of service (e.g., some access terminals may be allowed partial and/or temporary access while other access terminals may be allowed full access). An alien small cell may refer to a small cell on which the access terminal is not authorized to access or operate on, except for perhaps emergency situations (e.g., emergency-911 calls).

From a restricted small cell perspective, a home access terminal may refer to an access terminal that is authorized to access the restricted small cell installed in the residence of that access terminal's owner (usually the home access terminal has permanent access to that small cell). A guest access terminal may refer to an access terminal with temporary access to the restricted small cell (e.g., limited based on deadline, time of use, bytes, connection count, or some other criterion or criteria). An alien access terminal may refer to an access terminal that does not have permission to access the restricted small cell, except for perhaps emergency situations, for example, such as 911 calls (e.g., an access terminal that does not have the credentials or permission to register with the restricted small cell).

For convenience, the disclosure herein describes various functionalities in the context of a small cell. It should be appreciated, however, that a pico access point may provide the same or similar functionality for a larger coverage area. For example, a pico access point may be restricted, a home pico access point may be defined for a given access terminal, and so on.

The teachings herein may be employed in a wireless multiple-access communication system that simultaneously supports communication for multiple wireless access terminals. Here, each terminal may communicate with one or more access points via transmissions on the forward and reverse links. The forward link (or downlink) refers to the communication link from the access points to the terminals, and the reverse link (or uplink) refers to the communication link from the terminals to the access points. This communication link may be established via a single-in-single-out system, a multiple-in-multiple-out (MIMO) system, or some other type of system.

A MIMO system employs multiple (*N_{T}*) transmit antennas and multiple (*N_{R}*) receive antennas for data transmission. A MIMO channel formed by the *N_{T}* transmit and *N_{R}* receive antennas may be decomposed into *N_{S}* independent channels, which are also referred to as spatial channels, where *N_{S}* ≤ min{*N_{T}*, *N_{R}*}*.* Each of the *N_{S}* independent channels corresponds to a dimension. The MIMO system may provide improved performance (e.g., higher throughput and/or greater reliability) if the additional dimensionalities created by the multiple transmit and receive antennas are utilized.

A MIMO system may support time division duplex (TDD) and frequency division duplex (FDD). In a TDD system, the forward and reverse link transmissions are on the same frequency region so that the reciprocity principle allows the estimation of the forward link channel from the reverse link channel. This enables the access point to extract transmit beam-forming gain on the forward link when multiple antennas are available at the access point.

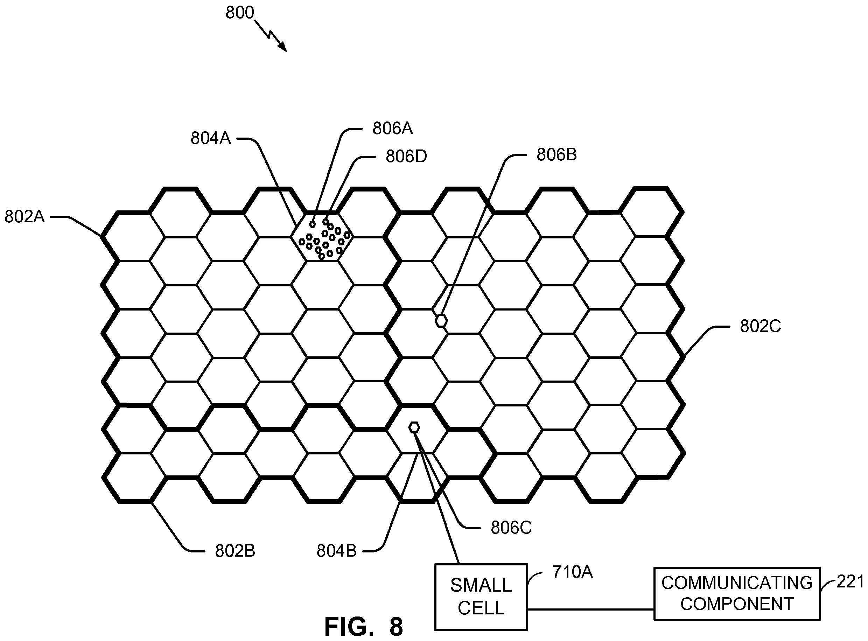

FIG. 8 illustrates an example of a coverage map 800 where several tracking areas (802A, 802B, and 802C) (or routing areas or location areas) are defined, each of which may include several macro coverage areas (804A and 804B), one or more of which may include one or more small cell coverage areas (806A, 806B, 806C, and 806D) serviced by one or more small cells operating according to one or more aspects described herein. Also, one or more small cell coverage areas may be defined within a given tracking area outside of a given macro coverage area. Specifically, areas of coverage associated with tracking areas 802A, 802B, and 802C are delineated by the wide lines and the macro coverage areas 804A and 804B are represented by the larger hexagons. As noted, the tracking areas 802A, 802B, and 802C may also include one or more small cell coverage areas 806A, 806B, 806C, and 806D. In this example, each of the small cell coverage areas (e.g., small cell coverage areas 806B and 806C) is depicted within or overlapping with one or more macro coverage areas (e.g., macro coverage areas 804A and 804B). It should be appreciated, however, that some or all of a small cell coverage area might not lie within a macro coverage area 804. In practice, a large number of small cell coverage areas (e.g., small cell coverage areas 806A and 806D) may be defined within a given tracking area or macro coverage area (e.g., 804A). In an example, small cell coverage areas 806B and 806C can be provided by a small cell, such as small cell 710A described above in FIG. 7. In this regard, small cell 710A can also include a communicating component 221 operable for determining to select an operating channel based on received measurement reports, modifying active and/or idle mode communication parameters to cause active and/or idle mode UEs to handover/reselect, switching to a selected operating channel, etc., as described above in reference to FIGs. 2, 3, and 4A-4C.

FIG. 9 illustrates in more detail the components of a wireless device 910 (e.g., a small cell) and a wireless device 950 (e.g., a UE) of a sample communication system 900 that may be adapted as described herein. In an example, wireless device 910 can include a small cell 106, and thus may include components associated therewith as described in FIG. 2 for performing certain functions, such as those described in FIGs. 3 and 4A-4C. For instance, the network monitoring component 222, channel selecting component 224, UE migrating component 226, functions thereof, etc., as described above, Blocks 310-316 of method 300 in FIG. 3, Blocks 402-440 of method 400 in FIGs. 4A-4C, etc., as described below, can be implemented by processor modules in processor 930, in computer executable code or instructions stored in memory 932 and executed by processor 930, etc. In one example, as depicted in this regard, eNB 910 can include a communicating component 221 coupled to processor 930 (e.g., communicating with or implemented by the processor 930) and operable for determining to select an operating channel based on received measurement reports, modifying active and/or idle mode communication parameters to cause active and/or idle mode UEs to handover/reselect, switching to a selected operating channel, etc., as described above in reference to FIGs. 2, 3, and 4A-4C. At the device 910, traffic data for a number of data streams is provided from a data source 912 to a transmit (TX) data processor 914. Each data stream may then be transmitted over a respective transmit antenna.

The TX data processor 914 formats, codes, and interleaves the traffic data for each data stream based on a particular coding scheme selected for that data stream to provide coded data. The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (e.g., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by a processor 930. A data memory 932 may store program code, data, and other information used by the processor 930 or other components of the device 910.

The modulation symbols for all data streams are then provided to a TX MIMO processor 920, which may further process the modulation symbols (e.g., for OFDM). The TX MIMO processor 920 then provides NT modulation symbol streams to NT transceivers (XCVR) 922A through 922T. In some aspects, the TX MIMO processor 920 applies beam-forming weights to the symbols of the data streams and to the antenna from which the symbol is being transmitted.

Each transceiver 922 receives and processes a respective symbol stream to provide one or more analog signals, and further conditions (e.g., amplifies, filters, and upconverts) the analog signals to provide a modulated signal suitable for transmission over the MIMO channel. NT modulated signals from transceivers 922A through 922T are then transmitted from NT antennas 924A through 924T, respectively. For example, transceivers 922A through 922T, or related receiver portions, can implement the process described in method 400 above.

At the device 950, the transmitted modulated signals are received by NR antennas 952A through 952R and the received signal from each antenna 952 is provided to a respective transceiver (XCVR) 954A through 954R. Each transceiver 954 conditions (e.g., filters, amplifies, and downconverts) a respective received signal, digitizes the conditioned signal to provide samples, and further processes the samples to provide a corresponding "received" symbol stream.

A receive (RX) data processor 960 then receives and processes the NR received symbol streams from NR transceivers 954 based on a particular receiver processing technique to provide NT "detected" symbol streams. The RX data processor 960 then demodulates, deinterleaves, and decodes each detected symbol stream to recover the traffic data for the data stream. The processing by the RX data processor 960 is complementary to that performed by the TX MIMO processor 920 and the TX data processor 914 at the device 910.

A processor 970 periodically determines which pre-coding matrix to use (discussed below). The processor 970 formulates a reverse link message comprising a matrix index portion and a rank value portion. A data memory 972 may store program code, data, and other information used by the processor 970 or other components of the device 950.

The reverse link message may comprise various types of information regarding the communication link and/or the received data stream. The reverse link message is then processed by a TX data processor 938, which also receives traffic data for a number of data streams from a data source 936, modulated by a modulator 980, conditioned by the transceivers 954A through 954R, and transmitted back to the device 910.

At the device 910, the modulated signals from the device 950 are received by the antennas 924, conditioned by the transceivers 922, demodulated by a demodulator (DEMOD) 940, and processed by a RX data processor 942 to extract the reverse link message transmitted by the device 950. The processor 930 then determines which pre-coding matrix to use for determining the beam-forming weights then processes the extracted message.

It will be appreciated that for each device 910 and 950 the functionality of two or more of the described components may be provided by a single component. It will be also be appreciated that the various communication components illustrated in FIG. 9 and described above may be further configured as appropriate to perform communication adaptation as taught herein. For example, the processors 930 / 970 may cooperate with the memories 932 / 972 and/or other components of the respective devices 910 / 950 to perform the communication adaptation as taught herein.

FIG. 10 illustrates an example access point apparatus 1000 represented as a series of interrelated functional modules. A module for determining to select a different operating channel at a small cell based at least in part on at least one of a downlink quality metric, an uplink quality metric, or a combination thereof 1002 may correspond at least in some aspects to, for example, a processing system or communication device (e.g., a receiver, transceiver, etc.), as discussed herein. A module for causing one or more connected mode UEs served by the small cell to handover to one or more neighboring cells based at least in part on determining to select the different operating channel 1004 may correspond at least in some aspects to, for example, a processing system or communication device (e.g., a receiver, transceiver, etc.), as discussed herein. A module for modifying one or more parameters configured to one or more idle mode UEs camped on the small cell to cause the one or more idle mode UEs to reselect to the one or more neighboring cells 1006 may correspond at least in some aspects to, for example, a processing system or communication device (e.g., a receiver, transceiver, etc.), as discussed herein. A module for switching to use the different operating channel at least when the one or more connected mode UEs are handed over to the one or more neighboring cells 1008 may correspond at least in some aspects to, for example, a processing system or communication device (e.g., a receiver, transceiver, etc.), as discussed herein

The functionality of the modules of FIG. 10 may be implemented in various ways consistent with the teachings herein. In some aspects, the functionality of these modules may be implemented as one or more electrical components. In some aspects, the functionality of these blocks may be implemented as a processing system including one or more processor components. In some aspects, the functionality of these modules may be implemented using, for example, at least a portion of one or more integrated circuits (e.g., an ASIC). As discussed herein, an integrated circuit may include a processor, software, other related components, or some combination thereof. Thus, the functionality of different modules may be implemented, for example, as different subsets of an integrated circuit, as different subsets of a set of software modules, or a combination thereof. Also, it should be appreciated that a given subset (e.g., of an integrated circuit and/or of a set of software modules) may provide at least a portion of the functionality for more than one module.

In addition, the components and functions represented by FIG. 10 as well as other components and functions described herein, may be implemented using any suitable means. Such means also may be implemented, at least in part, using corresponding structure as taught herein. For example, the components described above in conjunction with the "module for" components of FIG. 10 also may correspond to similarly designated "means for" functionality. Thus, in some aspects one or more of such means may be implemented using one or more of processor components, integrated circuits, or other suitable structure as taught herein.

In some aspects, an apparatus or any component of an apparatus may be configured to (or operable to or adapted to) provide functionality as taught herein. This may be achieved, for example: by manufacturing (e.g., fabricating) the apparatus or component so that it will provide the functionality; by programming the apparatus or component so that it will provide the functionality; or through the use of some other suitable implementation technique. As one example, an integrated circuit may be fabricated to provide the requisite functionality. As another example, an integrated circuit may be fabricated to support the requisite functionality and then configured (e.g., via programming) to provide the requisite functionality. As yet another example, a processor circuit may execute code to provide the requisite functionality.

It should be understood that any reference to an element herein using a designation such as "first," "second," and so forth does not generally limit the quantity or order of those elements. Rather, these designations may be used herein as a convenient method of distinguishing between two or more elements or instances of an element. Thus, a reference to first and second elements does not mean that only two elements may be employed there or that the first element must precede the second element in some manner. Also, unless stated otherwise a set of elements may comprise one or more elements. In addition, terminology of the form "at least one of A, B, or C" or "one or more of A, B, or C" or "at least one of the group consisting of A, B, and C" used in the description or the claims means "A or B or C or any combination of these elements." For example, this terminology may include A, or B, or C, or A and B, or A and C, or A and B and C, or 2A, or 2B, or 2C, and so on.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system.

The methods, sequences and/or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor.

Accordingly, an aspect of the disclosure can include a computer readable medium embodying a method as described herein for processing signals from various radio access technologies. Accordingly, the disclosure is not limited to the illustrated examples.

While the foregoing disclosure shows illustrative aspects, it should be noted that various changes and modifications could be made herein without departing from the scope of the disclosure as defined by the appended claims. The functions, steps and/or actions of the method claims in accordance with the aspects of the disclosure described herein need not be performed in any particular order. Furthermore, although certain aspects may be described or claimed in the singular, the plural is contemplated unless limitation to the singular is explicitly stated.

## Claims

1. A method for selecting an operating channel for a small cell, the method being executed by an apparatus and comprising:
selecting (406) an initial channel from a channel list downloaded from an operations, administration, and management, OAM, node as an operating channel at a small cell;
determining at least one downlink quality metric provided by one or more served user equipments, UEs;
determining at least one uplink quality metric based on communications received from the one or more served UEs;
determining (420) to select a different operating channel from the channel list at the small cell based at least in part on comparing (410, 412) the at least one downlink quality metric and the at least one uplink quality metric to respective thresholds;
causing (424, 426) one or more connected mode UEs served by the small cell to handover to one or more neighboring cells based at least in part on the determining to select the different operating channel;
modifying (434) one or more parameters configured for one or more idle mode UEs camped on the small cell to cause the one or more idle mode UEs to reselect to the one or more neighboring cells based at least in part on the determining to select the different operating channel; and
switching (436) to use the different operating channel at least when the one or more connected mode UEs are handed over to the one or more neighboring cells.

2. The method of claim 1, wherein the determining to select the different operating channel is based at least in part on determining an interference condition for one or more UEs based on comparing the at least one downlink quality metric to a first threshold and comparing the at least one uplink quality metric to a second threshold, wherein comparing the at least one uplink quality metric to the second threshold is based at least in part on determining that the at least one downlink quality metric is not less than the first threshold.

3. The method of claim 1, wherein the determining to select the different operating channel is further based at least in part on detecting occurrence of an event following a previous operating channel selection and based on a configured persistence delay initialized following the previous operating channel selection.

4. The method of claim 1, wherein the causing the one or more connected mode UEs to handover comprises negotiating handover with the one or more neighboring cells over an X2 interface.

5. The method of claim 1, wherein the causing the one or more connected mode UEs to handover comprises modifying one or more event parameters configured to the one or more connected mode UEs for triggering one or more events related to generating measurement reports to facilitate handover.

6. The method of claim 1, wherein the one or more parameters configured for the one or more idle mode UEs comprise a hysteresis parameter, an offset parameter, or a channel priority parameter related to idle mode reselection.

7. The method of claim 1, further comprising selecting the different operating channel based at least in part on determining signal strength measurements for a plurality of operating channels from one or more measurement reports received from the one or more connected mode UEs.

8. The method of claim 7, further comprising:
defining a neighbor list based at least in part on the one or more measurement reports; and
communicating the neighbor list to one or more served UEs.

9. An apparatus for selecting an operating channel for a small cell, comprising:
means for selecting an initial channel from a channel list downloaded from an operations, administration, and management, OAM, node as an operating channel at a small cell;
means for determining at least one downlink quality metric provided by one or more served user equipments, UEs;
means for determining at least one uplink quality metric based on communications received from the one or more served UEs;
means for determining to select a different operating channel from the channel list at the small cell based at least in part on comparing the at least one downlink quality metric and the at least one uplink quality metric to respective thresholds;
means for causing one or more connected mode UEs served by the small cell to handover to one or more neighboring cells based at least in part on determining to select the different operating channel;
means for modifying one or more parameters configured to one or more idle mode UEs camped on the small cell to cause the one or more idle mode UEs to reselect to the one or more neighboring cells based at least in part on determining to select the different operating channel; and
means for switching to use the different operating channel at least when the one or more connected mode UEs are handed over to the one or more neighboring cells.

10. The apparatus of claim 9, further comprising
means for determining an interference condition for one or more UEs based on comparing the at least one downlink quality metric to a first threshold and comparing the at least one uplink quality metric to a second threshold, wherein comparing the at least one uplink quality metric to the second threshold is based at least in part on determining that the at least one downlink quality metric is not less than the first threshold, and wherein the means for determining to select the different operating channel is configured to determine to select the different operating channel based at least in part on the interference condition.

11. The apparatus of claim 9, wherein the means for determining is configured to determine to select the different operating channel based at least in part on detecting occurrence of an event following a previous operating channel selection and based on a configured persistence delay initialized following the previous operating channel selection.

12. The apparatus of claim 9, wherein the means for causing is configured to cause the one or more connected mode UEs to handover at least in part by negotiating handover with the one or more neighboring cells over an X2 interface.

13. The apparatus of claim 9, wherein the means for causing is configured to cause the one or more connected mode UEs to handover at least in part by modifying one or more event parameters configured to the one or more connected mode UEs for triggering one or more events related to generating measurement reports to facilitate handover.

14. The apparatus of claim 9, wherein the one or more parameters configured to the one or more idle mode UEs comprise a hysteresis parameter, an offset parameter, or a channel priority parameter related to idle mode reselection.

15. A non-transitory computer-readable medium storing computer executable code for selecting an operating channel for a small cell, comprising code configured to perform any one of the methods of claims 1 to 8.

## Patentansprüche

1. Ein Verfahren zum Auswählen eines Betriebskanals für eine kleine Zelle, wobei das Verfahren durch eine Vorrichtung ausgeführt wird und Folgendes aufweist:
Auswählen (406) eines anfänglichen Kanals aus einer Kanalliste, die von einem OAM-Knoten (OAM = operations, administration and management bzw. Operationen, Verwaltung und Management) heruntergeladen wird, als ein Betriebskanal an einer kleinen Zelle;
Bestimmen wenigstens einer Downlink- bzw. Abwärtsstreckenqualitätsmetrik, die durch eine oder mehrere versorgte Nutzereinrichtungen bzw. UEs (UE = user equipment) vorgesehen wird;
Bestimmen wenigstens einer Uplink- bzw. Aufwärtsstreckenqualitätsmetrik basierend auf Kommunikationen, die von der einen oder den mehreren versorgten UEs empfangen werden;
Bestimmen (420) einen anderen Betriebskanal von der Kanalliste an der kleinen Zelle auszuwählen basierend wenigstens teilweise auf Vergleichen (410, 412) der wenigstens einen Abwärtsstreckenqualitätsmetrik und der wenigstens einen Aufwärtsstreckenqualitätsmetrik mit jeweiligen Schwellenwerten;
Veranlassen (424, 426) einer oder mehrerer UEs im verbundenen Modus, die durch die kleine Zelle versorgt werden, zu einer oder mehreren benachbarten Zellen zu übergeben basierend wenigstens teilweise auf dem Bestimmen, dass der andere Betriebskanal ausgewählt werden soll;
Modifizieren (434) eines oder mehrerer Parameter, die für eine oder mehrere Ruhemodus-UEs konfiguriert sind, die in die kleine Zelle eingebucht sind bzw. dort verweilen, um die eine oder die mehreren Ruhemodus-UEs zu veranlassen, eine Neuauswahl einer oder mehrerer benachbarten Zellen zu treffen basierend wenigstens teilweise auf dem Bestimmen, dass der andere Betriebskanal ausgewählt werden soll; und
Wechseln (436) zum Verwenden des anderen Betriebskanals wenigstens dann, wenn die eine oder die mehreren UEs im verbundenen Modus zu der einen oder den mehreren benachbarten Zellen übergeben werden.

2. Verfahren nach Anspruch 1, wobei das Bestimmen, den anderen Betriebskanal auszuwählen, wenigstens teilweise auf Bestimmen eines Interferenzzustandes für eine oder mehrere UEs basiert, und zwar basierend auf Vergleichen der wenigstens einen Abwärtsstreckenqualitätsmetrik mit einem ersten Schwellenwert und Vergleichen der wenigstens einen Aufwärtsstreckenqualitätsmetrik mit einem zweiten Schwellenwert, wobei das Vergleichen der wenigstens einen Aufwärtsstreckenqualitätsmetrik mit dem zweiten Schwellenwert wenigstens teilweise auf Bestimmen basiert, dass die wenigstens eine Abwärtsstreckenqualitätsmetrik nicht kleiner ist als der erste Schwellenwert.

3. Verfahren nach Anspruch 1, wobei das Bestimmen, den anderen Betriebskanal auszuwählen, weiter wenigstens teilweise auf Detektieren eines Auftretens eines Ereignisses basiert, das einer vorherigen Betriebskanalauswahl folgt und auf einer konfigurierten Persistenzverzögerung basiert, die nachfolgend auf die vorherige Betriebskanalauswahl initialisiert wurde.

4. Verfahren nach Anspruch 1, wobei das Veranlassen, dass die eine oder die mehreren UEs im verbundenen Modus einen Handover bzw. eine Übergabe durchführen, Aushandeln einer Übergabe mit der einen oder den mehreren benachbarten Zellen über eine X2-Schnittstelle aufweist.

5. Verfahren nach Anspruch 1, wobei das Veranlassen, dass die eine oder die mehreren UEs im verbundenen Modus eine Übergabe durchführen, Modifizieren eines oder mehrerer Ereignisparameter aufweist, die für die eine oder die mehreren UEs im verbundenen Modus konfiguriert sind zum Auslösen eines oder mehrerer Ereignisse, die mit Generieren von Messungsberichten in Beziehung stehen, um eine Übergabe zu ermöglichen.

6. Verfahren nach Anspruch 1, wobei der eine oder die mehreren Parameter, die für die eine oder die mehreren Ruhemodus-UEs konfiguriert sind, einen Hystereseparameter, einen Offset- bzw. Versatzparameter und einen Kanalprioritätsparameter in Bezug auf eine Ruhemodusneuauswahl aufweisen.

7. Verfahren nach Anspruch 1, das weiter Auswählen des anderen Betriebskanals basierend wenigstens teilweise auf Bestimmen von Signalstärkenmessungen für eine Vielzahl von Betriebskanälen aus einem oder mehreren Messungsberichten aufweist, die von einer oder mehreren UEs im verbundenen Modus empfangen werden.

8. Verfahren nach Anspruch 7, das weiter Folgendes aufweist:
Definieren einer Nachbarliste basierend wenigstens teilweise auf dem einen oder den mehreren Messungsberichten; und
Kommunizieren der Nachbarliste an eine oder mehrere versorgte UEs.

9. Eine Vorrichtung zum Auswählen eines Betriebskanals für eine kleine Zelle, die Folgendes aufweist:
Mittel zum Auswählen eines anfänglichen Kanals aus einer Kanalliste, die von einem OAM-Knoten (OAM = operations, administration and management bzw. Operationen, Verwaltung und Management) heruntergeladen wird, als ein Betriebskanal an einer kleinen Zelle;
Mittel zum Bestimmen wenigstens einer Downlink- bzw. Abwärtsstreckenqualitätsmetrik, die durch eine oder mehrere versorgte Nutzereinrichtungen bzw. UEs (UE = user equipment) vorgesehen wird;
Mittel zum Bestimmen wenigstens einer Uplink- bzw. Aufwärtsstreckenqualitätsmetrik basierend auf Kommunikationen, die von der einen oder den mehreren versorgten UEs empfangen werden;
Mittel zum Bestimmen einen anderen Betriebskanal von der Kanalliste an der kleinen Zelle auszuwählen basierend wenigstens teilweise auf Vergleichen der wenigstens einen Abwärtsstreckenqualitätsmetrik und der wenigstens einen Aufwärtsstreckenqualitätsmetrik mit jeweiligen Schwellenwerten;
Mittel zum Veranlassen einer oder mehrerer UEs im verbundenen Modus, die durch die kleine Zelle versorgt werden, zu einer oder mehreren benachbarten Zellen zu übergeben basierend wenigstens teilweise auf Bestimmen, dass der andere Betriebskanal ausgewählt werden soll;
Mittel zum Modifizieren eines oder mehrerer Parameter, die für eine oder mehrere Ruhemodus-UEs konfiguriert sind, die in die kleine Zelle eingebucht sind bzw. dort verweilen, um die eine oder die mehreren Ruhemodus-UEs zu veranlassen, eine Neuauswahl zu einer oder mehreren benachbarten Zellen zu treffen basierend wenigstens teilweise auf Bestimmen, dass der andere Betriebskanal ausgewählt werden soll; und
Mittel zum Wechseln zum Verwenden des anderen Betriebskanals wenigstens dann, wenn die eine oder die mehreren UEs im verbundenen Modus zu der einen oder den mehreren benachbarten Zellen übergeben.

10. Vorrichtung nach Anspruch 9, die weiter Folgendes aufweist
Mittel zum Bestimmen eines Interferenzzustandes für eine oder mehrere UEs basierend auf Vergleichen der wenigstens einen Abwärtsstreckenqualitätsmetrik mit einem ersten Schwellenwert und Vergleichen der wenigstens einen Aufwärtsstreckenqualitätsmetrik mit einem zweiten Schwellenwert, wobei das Vergleichen der wenigstens einen Aufwärtsstreckenqualitätsmetrik mit dem zweiten Schwellenwert wenigstens teilweise auf Bestimmen basiert, dass die wenigstens eine Abwärtsstreckenqualitätsmetrik nicht kleiner ist als der erste Schwellenwert, und wobei die Mittel zum Bestimmen, den anderen Betriebskanal auszuwählen, konfiguriert sind zum Bestimmen, den anderen Betriebskanal auszuwählen basierend wenigstens teilweise auf dem Interferenzzustand.

11. Vorrichtung nach Anspruch 9, wobei die Mittel zum Bestimmen konfiguriert sind zum Bestimmen den anderen Betriebskanal auszuwählen basierend wenigstens teilweise auf Detektieren eines Auftretens eines Ereignisses, das einer vorherigen Betriebskanalauswahl folgt und basierend auf einer konfigurierten Persistenzverzögerung, die initialisiert wurde nachfolgend auf die vorherige Betriebskanalauswahl.

12. Vorrichtung nach Anspruch 9, wobei die Mittel zum Veranlassen konfiguriert sind die eine oder die mehreren UEs im verbundenen Modus zu veranlassen eine Übergabe durchzuführen bzw. zu übergeben wenigstens teilweise durch Aushandeln einer Übergabe mit der einen oder den mehreren Nachbarzellen über eine X2-Schnittstelle.

13. Vorrichtung nach Anspruch 9, wobei die Mittel zum Veranlassen konfiguriert sind die eine oder die mehreren UEs im verbundenen Modus zu veranlassen, zu übergeben wenigstens teilweise durch Modifizieren eines oder mehrerer Ereignisparameter, die konfiguriert sind für die eine oder die mehreren UEs im verbundenen Modus zum Auslösen eines oder mehrerer Ereignisse, die mit Generieren von Messungsberichten zum Ermöglichen einer Übergabe in Beziehung stehen.

14. Vorrichtung nach Anspruch 9, wobei der eine oder die mehreren Parameter, die konfiguriert sind für die eine oder die mehreren Ruhemodus-UEs, einen Hystereseparameter, einen Versatzparameter oder einen Kanalprioritätsparameter in Bezug auf die Ruhemodusneuauswahl aufweisen.

15. Ein nicht transitorisches computerlesbares Medium, das von einem Computer ausführbaren Code speichert zum Auswählen eines Betriebskanals für eine kleine Zelle, der Code aufweist, der konfiguriert ist zum Durchführen eines der Verfahren der Ansprüche 1 bis 8.

## Revendications

1. Procédé de sélection d'un canal d'exploitation pour une petite cellule, le procédé étant exécuté par un appareil et comprenant :
une sélection (406) d'un canal initial à partir d'une liste de canaux téléchargée à partir d'un noeud d'exploitation, d'administration, et de gestion, OAM, à titre de canal d'exploitation au niveau d'une petite cellule ;
une détermination d'au moins une métrique de qualité de liaison descendante fournie par un ou plusieurs équipements utilisateur, UE, desservis ;
une détermination d'au moins une métrique de qualité de liaison montante sur la base de communications reçues à partir des un ou plusieurs UE desservis ;
une détermination (420) pour une sélection d'un canal d'exploitation différent à partir de la liste de canaux au niveau de la petite cellule sur la base au moins en partie d'une comparaison (410, 412) de l'au moins une métrique de qualité de liaison descendante et de l'au moins une métrique de qualité de liaison montante à des seuils respectifs ;
un entraînement (424, 426) d'un ou de plusieurs UE en mode connecté desservis par la petite cellule à réaliser un transfert vers une ou plusieurs cellules voisines sur la base au moins en partie de la détermination pour une sélection du canal d'exploitation différent ;
une modification (434) d'un ou de plusieurs paramètres configurés pour un ou plusieurs UE en mode veille campé sur la petite cellule pour entraîner les un ou plusieurs UE en mode veille à une resélection vers les une ou plusieurs cellules voisines sur la base au moins en partie de la détermination pour une sélection du canal d'exploitation différent ; et
une commutation (436) pour une utilisation du canal d'exploitation différent au moins lorsque les un ou plusieurs UE en mode connecté sont transférés vers les une ou plusieurs cellules voisines.

2. Procédé selon la revendication 1, dans lequel la détermination pour une sélection du canal d'exploitation différent est basée au moins en partie sur une détermination d'une condition d'interférence pour un ou plusieurs UE sur la base d'une comparaison de l'au moins une métrique de qualité de liaison descendante à un premier seuil et d'une comparaison de l'au moins une métrique de qualité de liaison montante à un second seuil, dans lequel une comparaison de l'au moins une métrique de qualité de liaison montante au second seuil est basée au moins en partie sur une détermination du fait que l'au moins une métrique de qualité de liaison descendante n'est pas inférieure au premier seuil.

3. Procédé selon la revendication 1, dans lequel la détermination pour une sélection du canal d'exploitation différent est en outre basée au moins en partie sur une détection d'une survenue d'un évènement suite à une sélection de canal d'exploitation précédente et sur la base d'un retard de persistance configuré initialisé suite à la sélection de canal d'exploitation précédente.

4. Procédé selon la revendication 1, dans lequel l'entraînement des un ou plusieurs UE en mode connecté à réaliser un transfert comprend une négociation d'un transfert avec les une ou plusieurs cellules voisines sur une interface X2.

5. Procédé selon la revendication 1, dans lequel l'entraînement des un ou plusieurs UE en mode connecté à réaliser un transfert comprend une modification d'un ou de plusieurs paramètres d'événement configurés pour les un ou plusieurs UE en mode connecté pour un déclenchement d'un ou de plusieurs événements liés à une génération de rapports de mesures pour faciliter un transfert.

6. Procédé selon la revendication 1, dans lequel les un ou plusieurs paramètres configurés pour les un ou plusieurs UE en mode veille comprennent un paramètre d'hystérèse, un paramètre de décalage ou un paramètre de priorité de canal lié à une resélection de mode veille.

7. Procédé selon la revendication 1, comprenant en outre une sélection du canal d'exploitation différent sur la base au moins en partie d'une détermination de mesures de force de signal pour une pluralité de canaux d'exploitation à partir d'un ou de plusieurs rapports de mesure reçus à partir des un ou plusieurs UE en mode connecté.

8. Procédé selon la revendication 7, comprenant en outre :
une définition d'une liste de voisins sur la base au moins en partie des un ou plusieurs rapports de mesures ; et
une communication de la liste de voisins à un ou plusieurs UE desservis.

9. Appareil de sélection d'un canal d'exploitation pour une petite cellule, comprenant : un moyen de sélection d'un canal initial à partir d'une liste de canaux téléchargée à partir d'un noeud d'exploitation, d'administration, et de gestion, OAM, à titre de canal d'exploitation au niveau d'une petite cellule ;
un moyen de détermination d'au moins une métrique de qualité de liaison descendante fournie par un ou plusieurs équipements utilisateur, UE, desservis ;
un moyen de détermination d'au moins une métrique de qualité de liaison montante sur la base de communications reçues à partir des un ou plusieurs UE desservis ;
un moyen de détermination pour une sélection d'un canal d'exploitation différent à partir de la liste de canaux au niveau de la petite cellule sur la base au moins en partie d'une comparaison de l'au moins une métrique de qualité de liaison descendante et de l'au moins une métrique de qualité de liaison montante à des seuils respectifs ;
un moyen d'entraînement d'un ou de plusieurs UE en mode connecté desservis par la petite cellule de réaliser un transfert vers une ou plusieurs cellules voisines sur la base au moins en partie d'une détermination pour une sélection du canal d'exploitation différent ;
un moyen de modification d'un ou de plusieurs paramètres configurés pour un ou plusieurs UE en mode veille campés sur la petite cellule pour entraîner les un ou plusieurs UE en mode veille à resélectionner les une ou plusieurs cellules voisines sur la base au moins en partie d'une détermination pour une sélection du canal d'exploitation différent ; et
un moyen de commutation pour une utilisation du canal d'exploitation différent au moins lorsque les un ou plusieurs UE en mode connecté sont transférés vers les une ou plusieurs cellules voisines.

10. Appareil selon la revendication 9, comprenant en outre :
un moyen de détermination d'une condition d'interférence pour un ou plusieurs UE sur la base d'une comparaison de l'au moins une métrique de qualité de liaison descendante à un premier seuil et d'une comparaison de l'au moins une métrique de qualité de liaison montante à un second seuil, dans lequel une comparaison de l'au moins une métrique de qualité de liaison montante au second seuil est basée au moins en partie sur une détermination du fait que l'au moins une métrique de qualité de liaison descendante n'est pas inférieure au premier seuil, et dans lequel le moyen de détermination pour une sélection du canal d'exploitation différent est configuré pour une détermination pour une sélection du canal d'exploitation différent sur la base au moins en partie de la condition d'interférence.

11. Appareil selon la revendication 9, dans lequel le moyen de détermination est configuré pour une détermination pour une sélection du canal d'exploitation différent sur la base au moins en partie d'une détection d'une survenue d'un événement suite à une sélection de canal d'exploitation précédente et sur la base d'un retard de persistance configuré initialisé suite à la sélection de canal d'exploitation précédente.

12. Appareil selon la revendication 9, dans lequel le moyen d'entraînement est configuré pour entraîner les un ou plusieurs UE en mode connecté à réaliser un transfert au moins en partie en négociant un transfert avec les une ou plusieurs cellules voisines sur une interface X2.

13. Appareil selon la revendication 9, dans lequel le moyen d'entraînement est configuré pour entraîner les un ou plusieurs UE en mode connecté à réaliser un transfert au moins en partie en modifiant un ou plusieurs paramètres d'événement configurés pour les un ou plusieurs UE en mode connecté pour un déclenchement d'un ou de plusieurs événements liés à une génération de rapports de mesures pour faciliter un transfert.

14. Appareil selon la revendication 9, dans lequel les un ou plusieurs paramètres configurés pour les un ou plusieurs UE en mode veille comprennent un paramètre d'hystérèse, un paramètre de décalage ou un paramètre de priorité de canal lié à une resélection de mode veille.

15. Support lisible par ordinateur non transitoire stockant un code exécutable par ordinateur pour une sélection d'un canal d'exploitation pour une petite cellule, comprenant un code configuré pour une réalisation d'un quelconque des procédés selon les revendications 1 à 8.
